(19) Europäisches Patentamt
European Patent Office
Office européen des brevets

(11) **EP 3 996 231 B1**

(12) **EUROPEAN PATENT SPECIFICATION**

(45) Date of publication and mention
of the grant of the patent:
**11.10.2023 Bulletin 2023/41**

(21) Application number: **20206699.9**

(22) Date of filing: **10.11.2020**

(51) International Patent Classification (IPC):
*H02J 3/38* (2006.01)   *H02J 3/50* (2006.01)

(52) Cooperative Patent Classification (CPC):
**H02J 3/388**; H02J 3/50

(54) **METHOD AND APPARATUS FOR DETECTING OF AN ISLANDING OF A DISTRIBUTED ELECTRICAL POWER SYSTEM**

VERFAHREN UND VORRICHTUNG ZUR DETEKTION VON INSELBILDUNG EINES VERTEILTEN STROMSYSTEMS

PROCÉDÉ ET APPAREIL DE DÉTECTION D'UN ÎLOTAGE D'UN SYSTÈME D'ALIMENTATION ÉLECTRIQUE DISTRIBUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2022 Bulletin 2022/19**

(73) Proprietors:
• **Rolls-Royce Solutions GmbH**
**88045 Friedrichshafen (DE)**
• **Rolls-Royce plc**
**London SW1E 6AT (GB)**

(72) Inventors:
• **Kollimalla, Sathish Kumar**
**Singapore 640922 (SG)**
• **Shicong, Yang**
**Singapore 753107 (SG)**
• **Dasgupta, Souvik**
**88045 Friedrichshafen (DE)**
• **Demharter, Johannes**
**86647 Buttenwiesen (DE)**

(74) Representative: **Eisenführ Speiser**
**Patentanwälte Rechtsanwälte PartGmbB**
**Stralauer Platz 34**
**10243 Berlin (DE)**

(56) References cited:
EP-A1- 1 926 844    EP-A1- 2 501 014
EP-B1- 1 926 844    EP-B1- 2 501 014

• **NIKOLOVSKI SRETE ET AL: "Islanding Detection of Synchronous Generator-Based DGs using Rate of Change of Reactive Power", IEEE SYSTEMS JOURNAL, IEEE, US, vol. 13, no. 4, 4 December 2019 (2019-12-04), pages 4344-4354, XP011752855, ISSN: 1932-8184, DOI: 10.1109/JSYST.2018.2889981 [retrieved on 2019-11-21]**
• **DAS PINKU ET AL: "Comparative Assessment of Various Islanding Detection Methods for AC and DC Microgrid", 2020 FIRST INTERNATIONAL CONFERENCE ON POWER, CONTROL AND COMPUTING TECHNOLOGIES (ICPC2T), IEEE, 5 January 2020 (2020-01-05), pages 396-400, XP033758710, Piscataway, NJ, US DOI: 10.1109/ICPC2T48082.2020.9071520 ISBN: 978-1-7281-4997-4 [retrieved on 2020-04-17]**
• **LI CANBING ET AL: "A review of islanding detection methods for microgrid", RENEWABLE AND SUSTAINABLE ENERGY REVIEWS, [Online] vol. 35, 24 April 2014 (2014-04-24), pages 211-220, XP055786711, US ISSN: 1364-0321, DOI: 10.1016/j.rser.2014.04.026 Retrieved from the Internet: URL:https://doi.org/10.1016/j.rser.2014.04 .026> [retrieved on 2021-03-18]**

## Description

The invention relates to a method for detecting island formation of a distributed electrical power system according to the preamble part of claim 1. A respective distributed electrical power system comprises at least one distributed electrical power generator for generating and providing electrical power to a connection, in particular a power line for electrical power, wherein the distributed electrical power system is interruptibly coupled to an electrical power grid.

The invention also relates to a respective controller, an islanding detection arrangement and a distributed electrical power system.

Distributed electrical power systems including relatively small electrical generation sources, in particular electrical power generators, are often used to feed additional active power into a utility grid close to a local electrical load or to ensure standby power for critical loads when power from the grid is temporarily unavailable. Those distributed generators are commonly interconnected with a larger-scale electrical power grid to enable sharing of excess power that they generate.

A persistent problem in distributed power generation systems, however, is the hazard to personnel and equipment that occurs when a distributed electrical power system becomes unintentionally disconnected from a segment of the electrical power grid that contains a primary central generation source. As a result, the distributed electrical power system and the local load form an island. Therefore, such a condition is often referred to as "unintentional islanding".

Upon having lost the connection to the electrical power grid, differences in active power and reactive power of the local island load and the power generation of the distributed electrical power system may lead to sudden large voltage changes, which usually causes a protection device of the distributed electrical power system to act and trip immediately.

If, however, the active power and reactive power of the local island load matches the active power and reactive power generated by the distributed power source, there will be no voltage jump that would trigger the protection device. Unless there is an alternative islanding detection, the distributed generator would continue to operate, which may result in a number of potentially serious problems. Due to the loss of mains, electrical equipment may be damaged by uncontrolled voltage and frequency excursions. Moreover, service personnel or the public may be harmed by inadvertent energizing of the lines by the distributed electrical power system.

Thus, it is a common effort to detect an islanding operation of a distributed electrical power system in general and in particular in the above mentioned cases. A respective distributed electrical power system usually comprises at least one distributed electrical power generator for generating and providing electrical power to a connection, in particular a power line for electrical power, wherein the distributed electrical power system is interruptibly coupled to an electrical power grid. In detecting island formation a known method comprises:

- generating a reactive-power signal having at least one probe-signal component of a specified kind by an islanding-detection arrangement coupled to the connection,
- injecting the reactive-power signal into the connection,
- measuring a voltage od frequency of the distributed electrical power system at the connection.

Generally speaking, an islanding-identification algorithm is applied to a monitored quantity, wherein measuring a voltage or frequency is the most prominent quantity. A result of the islanding-identification algorithm is indicative of whether the distributed electrical power system is decoupled from the electrical power grid. To detect unintentional islanding of distributed electrical power systems, various approaches in this regard have been formulated.

EP 1 926 844 B1 discloses a method for detecting islanding of a distributed power generator of the above mentioned kind as indicated in the introduction and provides a device for detecting islanding operation according to the disclosed method. The method comprises the following steps. In a first step, a reactive reference wave current is introduced. In a second step, changes of the local island load voltage caused by the reactive reference wave current are detected by measuring. In a third step, actual load voltage values are sampled and stored. Moreover, an absolute difference between the actual load voltage value and a previously sampled and stored load voltage value is calculated and compared with a predefined islanding detection threshold value, wherein the absolute difference passing the threshold is indicating an islanding of the distributed electrical power system.

In variants of the method disclosed by EP 1 926 844 B1, a counter is implemented to count the number of loss of mains detections within a specified period of time, wherein a loss of mains is only detected, if within a predefined period of time the increment of the counter value exceeds a predefined counter threshold value.

A problem of this and other approaches arise from the fact that a simple although established monitored quantity like local island load voltage with magnitude and frequency is insufficient. The reason is, that although such monitored quantity seemingly can be stable, still nevertheless the distributed electrical power system is already in an islanding operation modus.

Here it is also identified the prior Art document EP2501014A1, relating to distributed power generation and particularly to detecting islanding conditions for distributed generators. It discloses the preamble of independent claims 1, 16 and 17.

At last, one cites the document XP011752855 "Islanding Detection of Synchronous Generator-Based DGs using Rate of Change of Reactive Power", IEEE SYSTEMS JOURNAL, IEEE, US, vol. 13, no. 4, 4 December 2019 , pages 4344-4354,ISSN: 1932-8184, DOI: 10.1109/JSYST.2018.2889981.

Thus it is an object of the present invention to provide an improved method, for detecting islanding of a distributed electrical power system. Furthermore, it is an objective of the present invention to provide an arrangement, in particular an apparatus and system for performing this method. In particular it is desirable to arrive at an early warning of islanding with such method and arrangement.

In the following, the method according to the first aspect of the invention will be described.

The objective of providing an improved method for detecting islanding of a distributed electrical power system is achieved by a first aspect of the invention according to the method described in claim 1 for detecting island formation of a distributed electrical power system. As outlined in the preamble the method comprises :

- generating a reactive-power signal having at least one probe-signal component of a specified kind by an islanding-detection arrangement coupled to the connection,
- injecting the reactive-power signal into the connection,
- determining one or more monitored quantities, which are indicative of a response of the distributed electrical power system to the injected reactive-power signal, and
- applying an islanding-identification algorithm to each of the one or more determined monitored quantities, wherein a result of the islanding-identification algorithm is indicative of whether the distributed electrical power system is decoupled from the electrical power grid.

According to the invention the at least one of the monitored quantities involves a quantity consisting of

- a second derivative with respect to time of the frequency of a voltage associated with the generated electrical power.

Additionally, the at least one of the monitored quantities may further involve a quantity from the group consisting of:

- a first derivative with respect to time of a voltage angle of the voltage associated to the generated electrical power and
- a rotor angle of the at least one distributed electrical power generator.

The invention is based on the recognition that, whether the distributed electrical power system is coupled or decoupled from the electrical power grid, is at best detected by monitoring quantities, which are impacted by the injection of the reactive-power signal and whose magnitude of change due to the injected reactive-power signal depends on whether the distributed electrical power system is connected to the grid or islanding. In this conceptual sense, the inventors recognized that the decoupling of the distributed electrical power system is at best detected by using a monitored quantity, which involves at least the above listed quantities.

Thus the method is suited for detecting island formation of a distributed electrical power system, the distributed electrical power system including at least one distributed electrical power generator for generating and providing electrical power to a connection, in particular a power line for electrical power, wherein the distributed electrical power system is interruptibly coupled to an electrical power grid. The method comprises a number of steps as described in the following.

In a first step, a reactive-power signal is generated, wherein the reactive-power signal has at least one probe-signal component of a specified kind. The reactive-power signal is generated by an islanding-detection arrangement coupled to the connection between distributed electrical power system and electrical power grid and, in a subsequent step, injected into the connection.

In a preferably subsequent step, one or more monitored quantities are determined, which are indicative of a response of the distributed electrical power system to the injected reactive-power signal, and wherein at least one of the monitored quantities involves a quantity from a group consisting of a second derivative with respect to time of the frequency of a voltage associated with the generated electrical power, a first derivative with respect to time of a voltage angle of the voltage associated to the generated electrical power, and a rotor angle of the at least one distributed electrical power generator.

Preferably subsequently, an islanding-identification algorithm is applied to each of the one or more determined monitored quantities, wherein a result of the islanding-identification algorithm is indicative of whether the distributed electrical power system is decoupled from the electrical power grid.

The basis of invention starts from the recognition that a detection of an islanding of the distributed electrical power system is best performed by injecting a reactive power signal into the connection, which couples the distributed electrical power system and the electrical power grid. The reactive power signal functions as a probe signal, which introduces a defined disturbance into the distributed electrical power system. If the distributed electrical power system is coupled to the electrical power grid, the disturbance will not affect a production of power by the at least one distributed electrical power generator due to a stabilizing effect of the electrical power grid. However, if the distributed electrical power system is decoupled from the electrical power grid, the reactive-power signal disturbs the electrical power generator of the distributed electrical power generator. The word "islanding" is used synonymously with "decoupling" of the distributed electrical power system from the electrical power grid.

The invention in a second aspect leads to a controller as claimed in claim 16 for detecting island formation of a distributed electrical power system.

The invention in a third aspect leads to an islanding-detection arrangement as claimed in claim 17 and in a fourth aspect to a distributed electrical power system as claimed in claim 18.

These and further developed configurations of the invention are further outlined in the dependent claims. Thereby, the mentioned advantages of the proposed concept are even more improved. For each feature of the dependent claims it is claimed independent protection independent from all other features of this disclosure.

In a preferred embodiment of the method, the step of determining one or more monitored quantities further comprises the following two steps. In a first step, a voltage of the distributed electrical power system at the connection is measured. Subsequently, in a second step, the one or more monitored quantities are derived from the measured voltage. This embodiment is particularly advantageous, because it requires access only to the power connection, at which, both, injection of the reactive-power signal and measurement of the voltage can be performed.

In yet another preferred embodiment of the method, the islanding detection algorithm generally comprises identifying whether the at least one monitored quantity exceeds a threshold value and applying a decision criterion thereon. In particular it is preferred to comprise the following two steps:

- identifying, within a monitoring time window of a time-window length, time intervals during which the at least one monitored quantity exceeds a threshold value, and
- applying a decision criterion to the identified time intervals within the monitoring time window, wherein a result of applying the decision criterion to the identified time intervals is indicative of whether the distributed electrical power system is decoupled from the electrical power grid.

These two steps are particularly well suited to identify an islanding of the distributed electrical power system, since they can be used for a wide range of different monitored quantities.

In a variant of this embodiment, the threshold value is determined using an online-monitoring procedure of the amplitude of the one or more monitored quantities.

It is preferred that the online-monitoring procedure continuously adapts the threshold value due to a changing load condition of the distributed electrical power system. This is particularly advantageous since the amplitude of the monitored quantities usually do not only depend on the reactive-power signal, but also on the load of the distributed electrical power system. As a result, an online monitoring allows for a continues adaptation of the threshold values to the load conditions. As a result, the number of false positive or false negative detections of an islanding is reduced.

In another variant of this embodiment, the decision criterion and/or the threshold value are pre-determined in accordance with the at least one probe signal component. This is particularly advantageous to avoid false positive or false negative detection of an islanding. Using a pre-determined threshold value in accordance with the at least one probe signal component is particularly useful, when the load supplied to the at least one distributed electrical power generator is larger than 50%. In this case, the influence of the load on the amplitude of the monitored quantity can be neglected and therefore solely depends on the amplitude of the at least one probe-signal component. The idea of a pre-determined threshold value and an online monitoring for determining the threshold value can also be combined within a single algorithm depending on the load condition.

In one particular form of this variant, the decision criteria is pre-determined based on a number of maximum and minimum peaks of the at least one probe-signal component during one time-windows length. In an alternative form, the decision criteria is pre-determined based on a number of rising and falling edges of the at least one probe-signal component during one time-windows length.

In a preferred development of the method, the island-detection arrangement is plug-in coupled to the connection. This is advantageous because the island-detection arrangement can be added to any distributed electrical power system including at least one distributed electrical power generator.

In another preferred development of the method, the at least one distributed electrical power generator is operated in a predetermined islanding-operation mode, if the result of applying the islanding-detection algorithm is indicative of the distributed electrical power system being decoupled from the electrical power grid. This is particularly advantageous to prevent any harm brought about by the islanding of the distributed electrical power system.

In a variant of this embodiment, the predetermined islanding-operation mode leads to a shut-down of the at least one distributed electrical power generator, to prevent any hazards brought about from the islanding of the distributed electrical power system.

In another development of the method, the at least one monitored quantity is a difference between a rotor angle of the at least on distributed electrical power generator and an average value of the rotor angle of the at least on distributed electrical power generator. This method is particularly advantageous, because the aforementioned quantities are particularly well suited to reliably detect an islanding of the distributed electrical power system.

In yet another development of the method, the decision criterion indicates that the distributed electrical power system is decoupled from the electrical power grid, if

- a count of the identified time intervals exceeds a counter-threshold value, and/or
- an accumulated time of the identified time intervals exceeds an accumulated-time-threshold value. This development is particularly advantageous, because the two decision criteria described above are particularly well suited for detecting an islanding of the distributed electrical power system based on the identified time intervals.

In another development of the method, at least one monitored quantity is an absolute value of the first derivative with respect to time of a voltage angle of the voltage associated to the generated electrical power. In addition, the decision criterion for that monitored quantity defines an upper limit for the number of identified time intervals, which, if exceeded by the identified time intervals, indicates the distributed electrical power system to be decoupled. This development is particularly advantageous, because changes of the first derivative with respect to time of the voltage angle are indicative of an islanding of the distributed electrical power system. Moreover, using an upper limit for the number of identified time intervals prevents a false detection of an islanding due to statistical fluctuation of the first derivative with respect to time of the voltage angle.

In yet another development of the method, at least one monitored quantity is an absolute value of a second derivative with respect to time of a frequency of the voltage associated to the generated electrical power. Furthermore, the decision criterion of that monitored quantity defines an upper limit for the number of identified time intervals, which, if exceeded by the identified time intervals, indicates the distributed electrical power system to be decoupled. This development is particularly advantageous, because, if the distributed electrical power system is decoupled from the power grid, the reactive-power signal will cause the absolute value of the second derivative with respect to time of a frequency to exceed the threshold value. Furthermore, determining the distributed electrical power system to be decoupled from the power grid based on an upper limit for the number of identified time intervals is particularly reliable.

In yet another development of the method according to any of the preceding claims, at least one monitored quantity is an absolute value of a difference between a rotor angle of the at least one distributed electrical power generator and an average rotor angle of the at least one distributed electrical power generators , wherein the average rotor angle is determined by averaging the rotor angle over an averaging time interval. Furthermore, the decision criterion for that monitored quantity defines an upper limit for the number of identified time intervals, which, if exceeded by the identified time intervals, indicates the distributed electrical power system to be decoupled. This development is particularly advantageous, because, if the distributed electrical power system is decoupled from the power grid, the reactive-power signal will affect the rotor angle of the at least one distributed electrical power generators. As a result, the difference between a rotor angle and an average rotor angle can be used to reliably detect an islanding of the distributed electrical power system. Moreover, determining based on the number of identified time intervals, whether the distributed electrical power system is decoupled from the electrical power grid is particular reliable.

In a variant of the described development, the averaging time interval corresponds to the monitoring time window. This is advantageous, because the monitoring time window is of a short enough time length such that the average rotor angle is updated often enough to be adjusted to medium and long term variations of the rotor angle and of a sufficient time to perform an averaging procedure.

In yet another development of the method, the at least one probe signal component is periodic with time and comprises

- a square-wave-like function with short rise and fall times, and/or
- a step-function-like function with short rise or fall times between steps, which monotonically increases during a first half-wave of the step-function-like function and monotonically decreases during a second half-wave of the step-function-like function. This development is particularly advantageous, because the rising and falling edges of the square-wave-like function introduce perturbations into the system that the distributed electrical power system cannot fully compensate if decoupled from the electrical power grid. Furthermore, the step-function-like function continuously pushes the quantities characterizing the voltage of the distributed electrical power system towards the threshold value.

In a further development of the method, the injected reactive-power signal is a periodic function with respect to time having at least one of the following probe-signal components:

- a square-wave-like function with a positive amplitude during a first half period of the reactive-power signal and a negative amplitude during a second half period; and/or

- a square-wave-like function with a positive amplitude during a fraction of a first half period while the amplitude is zero during a remaining part of the first half period and a negative amplitude during a fraction of a second half period while the amplitude is zero during a remaining part of the second half period ; and/or

- a step-function-like function, which monotonically increases during a first half wave of the step function, subsequently returns to zero, monotonically decreases during a second half wave of the step function, and subsequently returns to zero. This development is particularly advantageous, because abrupt changes in the amplitude of the square-wave-like functions due to rising and falling edges introduce perturbations into the voltage that allow a detection of islanding of the distributed electrical power system. Moreover, by using square-wave-like functions possessing rising and falling edges within a different temporal proximity allows to vary the perturbative effect on the voltage. Furthermore, the step-function-like function continuously pushes the quantities characterizing the voltage of the distributed electrical power system towards the threshold value.

In a variant of the described development, the absolute amplitude of the square-wave-like function and/or the step-function-like function is less than 10 percent, in particular 5 percent or 2.5 percent, of the reactive-power produced by the at least one distributed electrical power generator. This development is particularly advantageous, because the reactive-power signal with the given amplitude causes perturbations of the voltage that are large enough to be detected in the case that the distributed electrical power system is decoupled. Additionally, the amplitudes are as small as possible to minimize a required energy storage for generating the reactive-power signal.

In a further variant of the described development, which can also be combined with the variant described above, the step-function-like function comprises at least five steps per half wave. This development is particularly advantageous, because a least five steps per half wave continuously drive the monitored quantity towards the threshold.

In another development of the method, the injected reactive-power signal is a periodic function with respect to time with a period length, wherein the period length amounts to less than the time-window length. This development is particularly advantageous, because when the period length is smaller than the time-window length, an identical pattern can be expected to be obtained for the voltage for all periods.

In a variant of the development described above, the period length amounts to less than or equal to 80 percent of the time-window length.

In yet another development of the method, a plurality of monitoring quantities are determined. Moreover, each of the plurality of monitored quantities is associated with an individual threshold value and an individual decision criterion. Furthermore, the distributed electrical power system is identified as decoupled from the electrical power grid only if a number of decision criteria indicating that the distributed electrical power system is decoupled from the electrical power grid is larger than a decision-criteria-count threshold. This development is particularly advantageous, because the combination of monitored quantities allows a more trustable determination of a decoupling of the distributed electrical power system from the electrical power grid, wherein a number of false-positives and a number of false-negatives of the determination is significantly reduced.

In the following, the controller according to the second aspect of the invention adapted for detecting island formation will be described.

The controller according to the second aspect of the invention is adapted for detecting island formation in a distributed electrical power system. The distributed electrical power system comprises at least one distributed electrical power generator for generating and providing electrical power to a connection, in particular a power line for electrical power. Furthermore, the distributed electrical power system is interruptibly coupled to an electrical power grid. and wherein the contrailer is adapted to execute the method according to the first aspect of the invention. In the controller the at least one of the monitored quantities involves a quantity consisting of:

- a second derivative with respect to time of the frequency of a voltage associated with the generated electrical power.

Additionally, the at least one of the monitored quantities may further involve a quantity from the group consisting of:

- a first derivative with respect to time of a voltage angle of the voltage associated to the generated electrical power, and
- a rotor angle of the at least one distributed electrical power generator.

Thus, the controller shares the advantages of the method according to the first aspect of the invention.

In a preferred development of the controller of the second aspect of the invention, the controller comprises an injection controller configured to provide a signal to a reactive-power-current-injection unit to generate a reactive-power signal having at least one probe-signal component of a specified kind from an islanding-detection arrangement coupled to the connection and to inject the reactive-power signal into the connection. Furthermore, preferably the controller comprises a monitored-quantity-determination unit that is configured to determine one or more monitored quantities, which are indicative of a response of the distributed electrical power system to the injected reactive-power signal. Moreover, the controller comprises an evaluation unit that is configured to apply an islanding-identification algorithm to each of the one or more derived monitored quantities, wherein a result of the islanding-identification algorithm is indicative of whether the distributed electrical power system is decoupled from the electrical power grid. According to the invention in the controller at least one of the monitored quantities determined by the monitored-quantity-determination unit involves a quantity consisting of: a second derivative with respect to time of the frequency of a voltage associated to the generated electrical power. Additionally, the at least one of the monitored quantities may further involve a quantity from the group consisting of :

a first derivative with respect to time of a voltage angle of the voltage associated to the generated electrical power, and
a rotor angle of the at least one distributed electrical power generator.

This shares the advantages of the method according to the first aspect of the invention.

In the following, the islanding detection arrangement according to the third aspect of the invention is described. The islanding-detection arrangement is adapted for detecting island formation in a distributed electrical power system, the distributed electrical power system is interruptibly coupled to an electrical power grid. Furthermore, the distributed electrical power system comprises at least one distributed electrical power generator for generating and providing electrical power to a connection, in particular a power line for electrical power. The islanding-detection arrangement comprises a reactive-power-current-injection unit having

- an energy-storage unit that is configured to store energy and to generate and provide an electrical DC current from the stored energy, and
- a converter unit that receives the electrical DC current from the energy-storage unit and is configured to provide an electrical AC current for injection a reactive-power signal into the connection.

Furthermore, the islanding-detection arrangement comprises a controller, wherein the controller is adapted to execute the inventive method; . In the controller the at least one of the monitored quantities involves a quantity consisting of:

- a second derivative with respect to time of the frequency of a voltage associated with the generated electrical power.

Additionally, the at least one of the monitored quantities may further involve a quantity from the group consisting of:

- a first derivative with respect to time of a voltage angle of the voltage associated to the generated electrical power, and
- a rotor angle of the at least one distributed electrical power generator.

This development shared the advantages of the method according to the first aspect of the invention.

Preferably the controller further has:

- an injection controller configured to provide a signal to a reactive-power-current-injection unit to generate a reactive-power signal having at least one probe-signal component of a specified kind from an islanding-detection arrangement coupled to the connection and to inject the reactive-power signal into the connection, and/or
- a monitored-quantity-determination unit that is configured to determine one or more monitored quantities, which are indicative of a response of the distributed electrical power system to the injected reactive-power signal, and/or
- an evaluation unit that is configured to apply an islanding-identification algorithm to each of the one or more derived monitored quantities, wherein a result of the islanding-identification algorithm is indicative of whether the distributed electrical power system is decoupled from the electrical power grid.

In a variant of the islanding-detection arrangement, the energy-storage unit comprises an electrical storage, in particular the electrical storage being in form of a battery and/or a capacitor. This development shared the advantages of the method according to the first aspect of the invention.

In the following, the distributed electrical power system according to the fourth aspect of the invention is described.

The distributed electrical power system is interruptibly coupled to an electrical power grid and comprises at least one distributed electrical power generator for generating and providing electrical power to a connection, in particular a power line for electrical power. Furthermore, the distributed electrical power system comprises the islanding-detection arrangement according to the third aspect of the invention. This development shared the advantages of the method according to the first aspect of the invention.

In a variant of the distributed electrical power system of the fourth aspect of the invention, the distributed electrical power generator is part of a genset comprising a prime mover with an engine, which is coupled to the distributed electrical power generator. This development shared the advantages of the method according to the first aspect of the invention.

These and other aspects of the invention will be apparent from and elucidated with reference to the embodiments described hereinafter. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. The features of the invention disclosed in the description, in the drawings and in the claims may be essential for the further development of the invention, either individually or in any combination.

Further advantages, features and details of the invention result from the following description of the preferred embodiments as well as from the drawings, which show in:

Fig. 1a     a preferred embodiment of an arrangement of a distributed electrical power system coupled to an electrical power grid, wherein the distributed electrical power system comprises an islanding-detection arrangement of a preferred embodiment according to the concept of the invention;

Fig. 1b     an illustration of the rotor angle of the distributed electrical power generator comprised within the distributed electrical power system of Fig. 1a;

Fig. 1c     the controller in a preferred embodiment according to the concept of the invention of the islanding-detection arrangement of embodiment of Fig. 1a;

Fig. 2a     a method for detecting island formation in a preferred embodiment according to the concept of the invention, the method adapted to be executed by the islanding-detection arrangement for detecting islanding of the distributed-power system of Fig. 1a;

Fig. 2b     an embodiment of the method of Fig. 2a in combination with a particular islanding-detection algorithm;

Fig. 3a     an additional further embodiment of the method of Fig. 2a or Fig. 2b, wherein the at least one monitored quantity is a first derivative with respect to time of a voltage angle of the measured voltage - the embodiment shown in Fig. 3a is also referred to as "Algo-4";

Fig. 3b     a mandatory, to the invention, embodiment of the method of Fig. 2a or Fig. 2b, wherein the at least one monitored quantity is a second derivative with respect to time of a frequency of the measured voltage. The embodiment shown in Fig. 3b is also referred to as "Algo-5";

Fig. 3c     an additional further embodiment of the method of Fig. 2a or Fig. 2b, wherein the at least one monitored quantity is a rotor angle the distributed power generator 104;

Fig. 4a     an embodiment of a method further using a first derivative with respect to time of the measured voltage as the monitored quantity;

Fig. 4b     an embodiment of a method further using a first derivative with respect to time of the measured voltage as the monitored quantity;

Fig. 5a     an embodiment of a method using a frequency of the measured voltage as the monitored quantity;

Fig. 5b     an embodiment of a method using a peak frequency of frequency of the measured voltage as the monitored quantity;

Fig. 6     an particular preferred embodiment of the method of Fig. 2a or Fig. 2b, wherein in a developed configuration a plurality of monitored quantities derived from the measured voltage are used to determine whether a distributed electrical power system is islanding;

Fig. 7        for illustration an embodiment of the reactive-power signal comprising three probe-signal components;

Fig. 8a       for illustration the probe-signal component "Signal-1" together with the time-window length;

Fig. 8b       for illustration the rotor angle as a function of time together with marks identifying the time-window length;

Fig. 9        an exemplifying setup for a simulation of a distributed electrical power system interruptibly coupled to an electrical power grid;

Fig. 10       a performance comparison of a comparative commonplace relayprotection mechanisms and a preferred method "Algo-7" for scenario no. 1 of Tab. 1;

Fig. 11       a performance comparison of a comparative commonplace relayprotection mechanisms and method "Algo-7" for scenario no. 2 of Tab. 1;

Fig. 12       a performance comparison of comparative commonplace relayprotection mechanisms and method "Algo-7" for scenario no. 3 of Tab. 1; and

Fig. 13       a performance comparison of comparative commonplace relayprotection mechanisms and method "Algo-7" for scenario no. 4 of Tab. 1.

The invention is defined by the features of the independent claims 1, 16 and 17. Preferred embodiments are defined in the dependent claims.

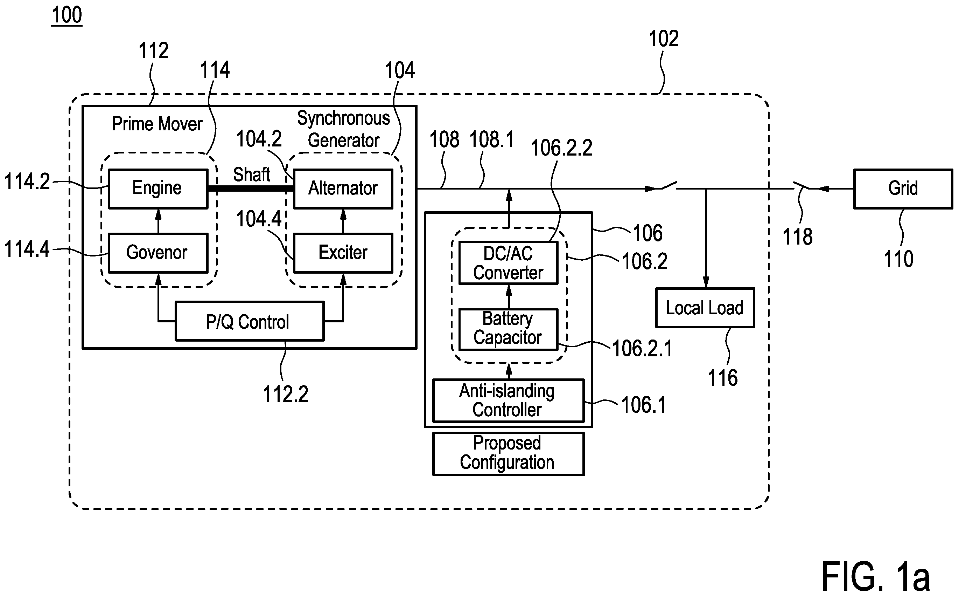

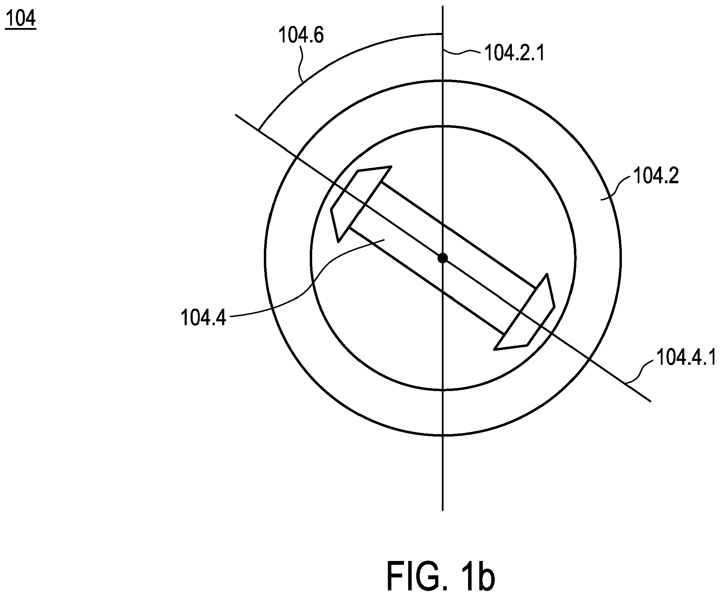

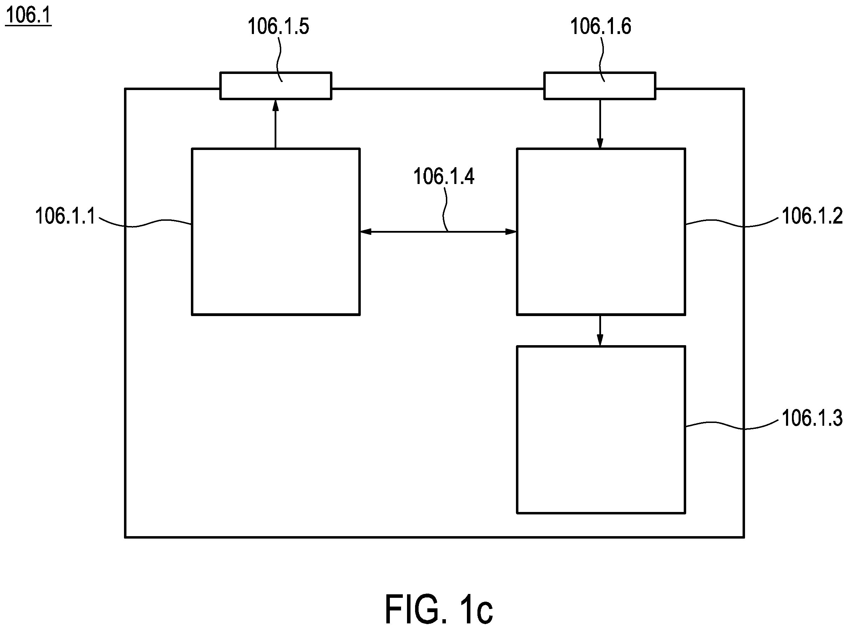

In the following, an embodiment of an islanding-detection arrangement will be explained with reference to Figs. 1a, Fig. 1b and Fig. 1c.

Fig. 1a shows an arrangement 100 of a distributed electrical power system 102 coupled to an electrical power grid 110 ("Grid"), wherein the distributed electrical power system 102 comprises an islanding-detection arrangement 106.

The distributed electrical power system 102 comprises an electrical-power-generator arrangement 112 and a local load 116 ("Local Load"). The electrical-power-generator arrangement 112 comprises an electrical power generator 104 and a prime mover 114 ("Prime Mover").

In the electrical-power-generator arrangement 112 shown Fig. 1a, the electrical power generator 104 ("Synchronous Generator") in this embodiment is a synchronous generator with an alternator 104.2 ("Alternator" which below is also referred to as a stator), which is excited by an exciter 104.4 ("Exciter").

The alternator 104.2 of the electrical power generator 104 is driven by a prime mover 114 comprising an engine 114.2 ("Engine"). The engine 114.2 is controlled by an engine-control unit 114.4 ("Governor") in Fig. 1a.

The engine-control unit 114.4 ("Governor") and the exciter 104.4 ("Exciter" which below is also referred to as a rotor) are both controlled by a control unit 112.2 ("P/Q Control"), which in this embodiment is configured as a P/Q Control, i.e. for control of active power (P) an reactive power (Q). The electrical power generator 104 generates power into a power connection 108, which is connected to the local load 116. The functional role of the "Exciter" 114.2 which below is also referred to as a rotor and "Alternator" which below is also referred to as a stator can also be vice versa in other embodiments notwithstanding the generator functional operation of synchronous generator 104.

The alternator 104.2 ("Alternator") of the electrical power generator 104 is characterized by a rotor angle, which will be explained in the following with reference to Fig. 1b. Fig. 1b shows a non-restrictive example as an illustration of the rotor angle of the distributed electrical power generator 104 comprised within the distributed electrical power system 102 of Fig. 1a. Therein voltage is generated through induction by a rotor 104.4 with a rotor magnetic field rotating within a stator 104.2 with a stator magnetic field, which is rotating. The rotor magnetic field and the stator magnetic field are defined by a rotor-magnetic-field axis 104.4.1 and a stator-magnetic-field axis 104.2.1, respectively, which lie within the plane orthogonal to the axis of rotation of the rotor 104.4. In a synchronous generator, the stator-magnetic-field axis 104.2.1 and the rotor-magnetic-field axis 104.4.1 rotate around the axis of rotation of the rotor 104.4 with the same angular velocity. An angle between the stator-magnetic-field axis 104.2.1 and the rotor-magnetic-field axis 104.4.1 is referred to as rotor angle 104.6. As will be described later, the rotor angle 104.6 can be used to determine an islanding of the distributed electrical power system 102. In the following, Fig. 1a will be further described.

As further shown in Fig. 1a for the arrangement 100 of a distributed electrical power system 102 coupled to an electrical power grid 110 ("Grid"), the distributed electrical power system 102 comprises an islanding-detection arrangement 106. Via the power connection 108, the distributed electrical power system 102 is interruptibly coupled to the electrical power grid 110. A switch 118 in the power connection 108 represents that the power connection 108 interruptibly is coupled between the distributed electrical power system 102 and the electrical power grid 110. During normal operation, the switch 116 is closed.

However, as a result of, e.g. a damage of the connection 108 and a disconnection due to maintenance work, the power connection 108 between the distributed electrical power system 102 and the electrical power grid 110 can be interrupted, which corresponds to a situation wherein the switch 118 is opened. When the switch 116 is opened, the electrical power generator 104 has to fully supply the local load 116.

In a case, where an active power and a reactive power of the electrical power generator 104 and of the local load 116 differ significantly, sudden large voltage changes usually occur, which lead to a protection device of the distributed electrical power system to act and trip immediately. If, however, the active power and the reactive power of the electrical power generator 104 and of the local load 116 only differ slightly, in general there will be no voltage jumps, which would trigger the protection device. As a consequence, the decoupling of the distributed electrical power system 102 and the electrical power grid 110 will go unnoticed, which can cause harm to machinery and operation personal. To prevent such an unnoticed islanding of the distributed electrical power system 102, the distributed electrical power system further comprises the islanding-detection arrangement 106.

Further referring to the islanding-detection arrangement 106 for the arrangement 100 of a distributed electrical power system 102 coupled to an electrical power grid 110 ("Grid"), said islanding-detection arrangement 106 comprises a reactive-power-injection unit 106.2 and a controller 106.1.

The reactive-power-injection unit 106.2 comprises an energy-storage unit 106.2.1 ("Battery/Capacitor") that is configured to store energy to generate an electrical DC current from the stored energy. As examplified in the embodiment of the islanding-detection arrangement 106 of Fig. 1a, a battery is used to store the electrical energy in the energy-storage unit 106.2.1. However, in other embodiments of the islanding-detection arrangement 106, a capacitor can be used to store the electrical energy - respectively the energy-storage unit 106.2.1 is also labelled "Battery/Capacitor". Furthermore, the reactive-power-injection unit 106.2 comprises a converter unit 106.2.2 ("DC/AC Converter") that receives the electrical DC current from the energy-storage-unit 106.2.1 and is configured to provide an electrical AC current for injection of a reactive-power signal into the power connection 108.

The controller 106.1 ("Anti-Islanding Controller") of the islanding-detection arrangement 106 will be explained in a preferred embodiment which is labelled as an examplifying "Proposed Configuration" in Fig. 1a and the "Proposed Configuration" of the controller 106.1 ("Anti-Islanding Controller") is shown therein in more detail with reference to Fig. 1c. Fig. 1c shows the controller 106.1 of the islanding-detection arrangement 106 of Fig. 1a.

The controller 106.1 comprises an injection controller 106.1.1, which is configured to provide a signal to the reactive-power-current-injection unit 106.2 via an interface 106.1.5 to generate the reactive-power signal and to inject the reactive-power signal 200 into the connection 108.

Furthermore, the controller 106.1 comprises a monitored-quantity-determination unit 106.1.2. The monitored-quantity-determination unit 106.1.2 is configured to measure a voltage 108.1 of the distributed electrical power system 100 at the power connection 108 via an interface 106.1.6 and to derive from the measured voltage at least one monitored quantity, wherein the monitored quantity is derived for a monitoring time window of a time-window length.

A value of the one or more derived monitored quantities in general is send via a communication link 106.1.4 to a evaluation unit 106.1.3.

Moreover, the controller 106.1 comprises said evaluation unit 106.1.3 that receives said value of the monitored quantity from the voltage-measurement unit 106.1.2 via the communication link 106.1.4 and that is configured to apply an islanding-identification algorithm to each of the at least one derived monitored quantity, wherein a result of applying the islanding-identification algorithm is indicative of whether the distributed electrical power system 102 is decoupled from the electrical power grid 110.

In other embodiments, the controller 106.1 only comprises a single interface, which is used alternatingly by the voltage-measurement unit 106.1.2 and by the reactive-power-injection unit 106.2.

In yet other embodiments, the controller 106.1 additionally or alternatively to the voltage-measurement unit 106.1.2 comprises an input port to receive input-sensor signals, such as a voltage-sensor signal measured by an external voltage-measurement device or a rotor-angle-sensor signal from a sensor measuring the rotor angle of the distributed electrical power generator 104.

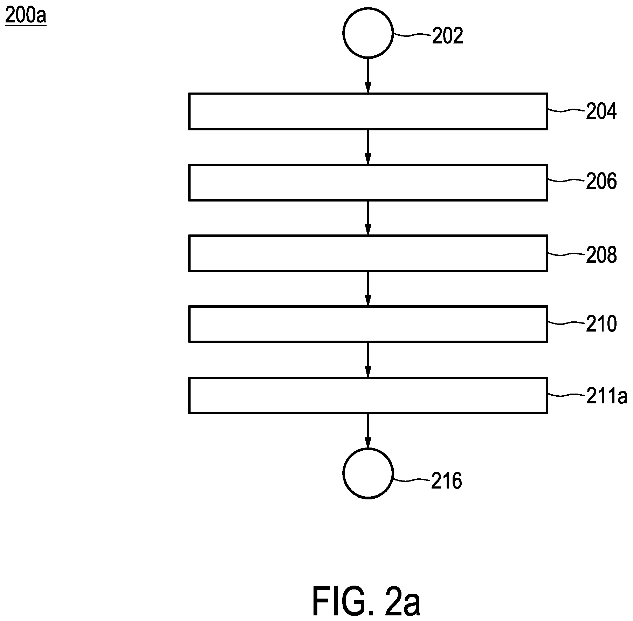

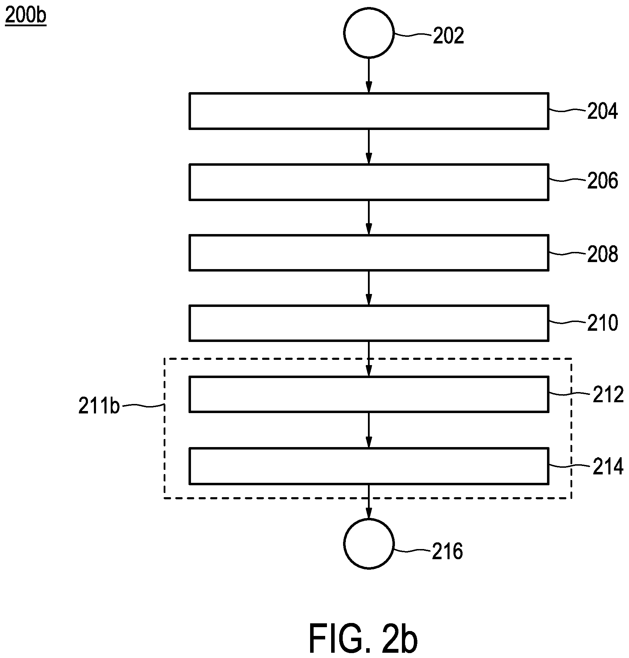

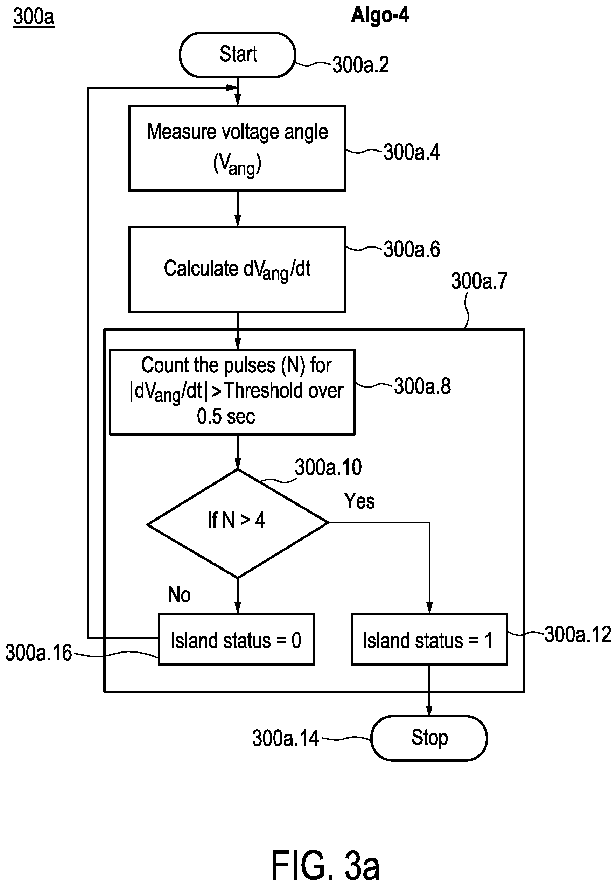

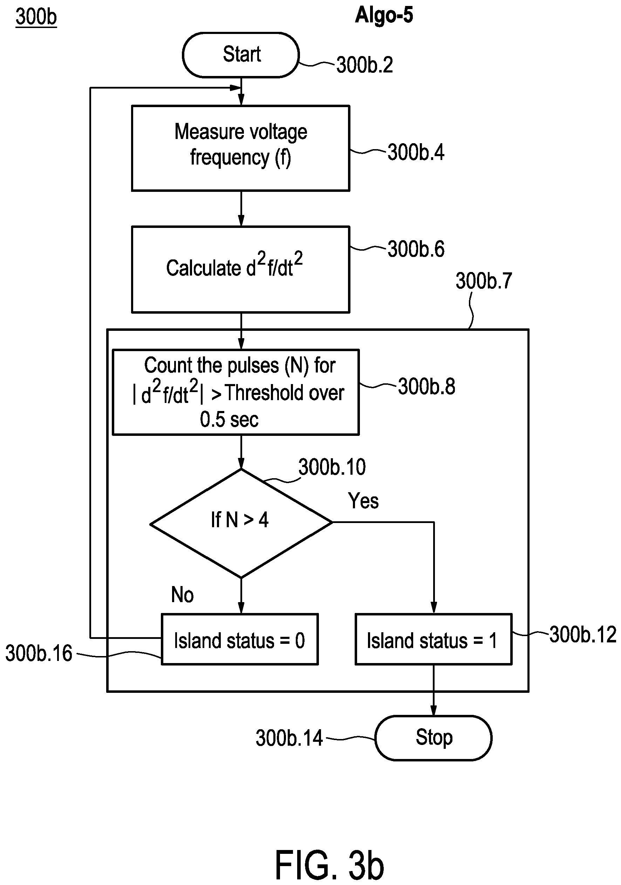

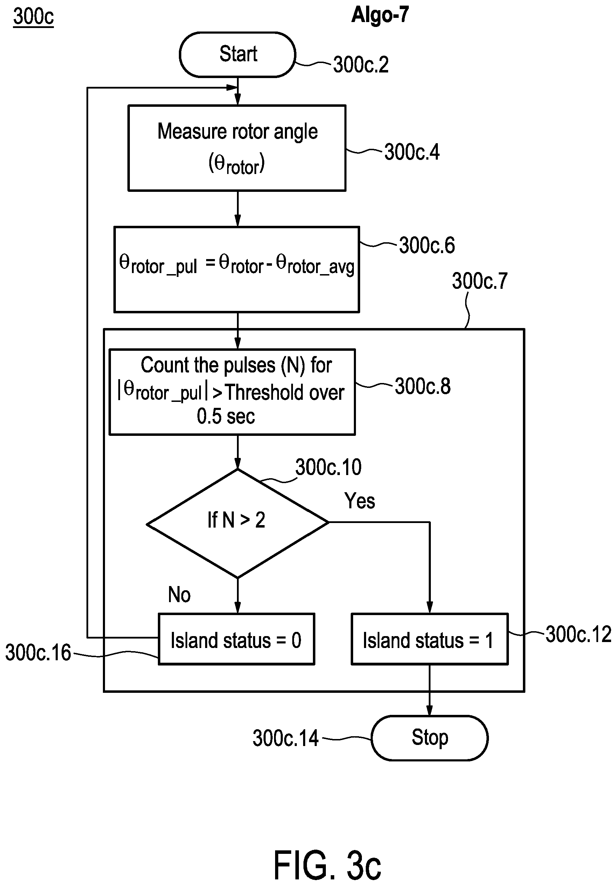

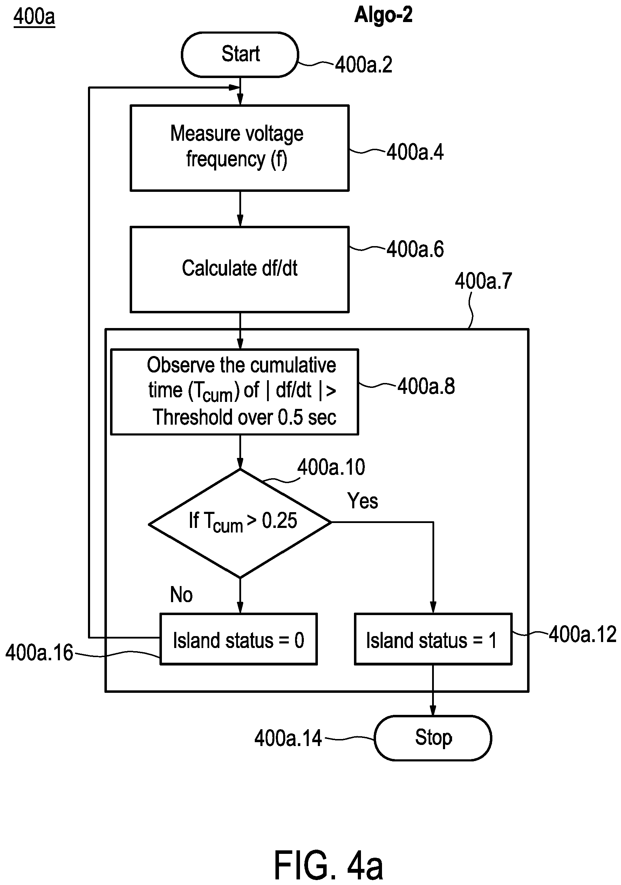

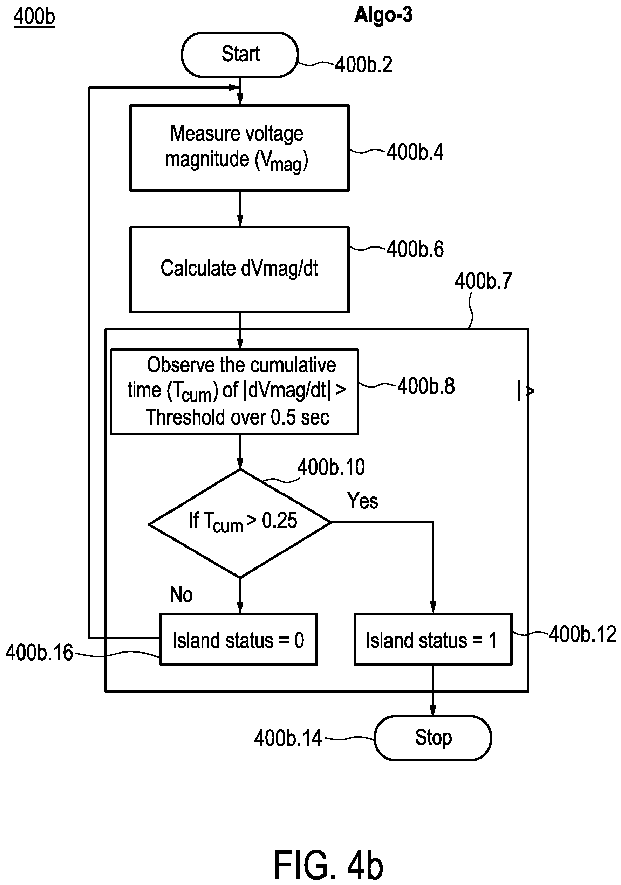

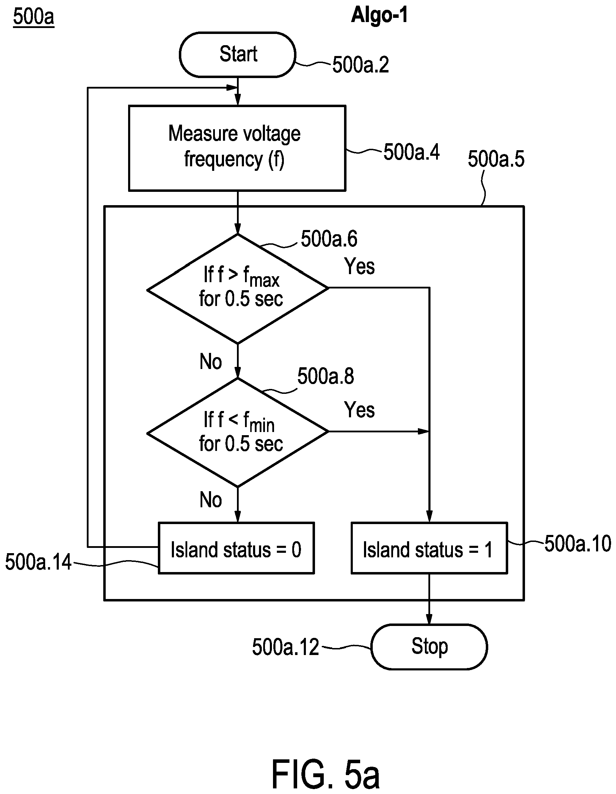

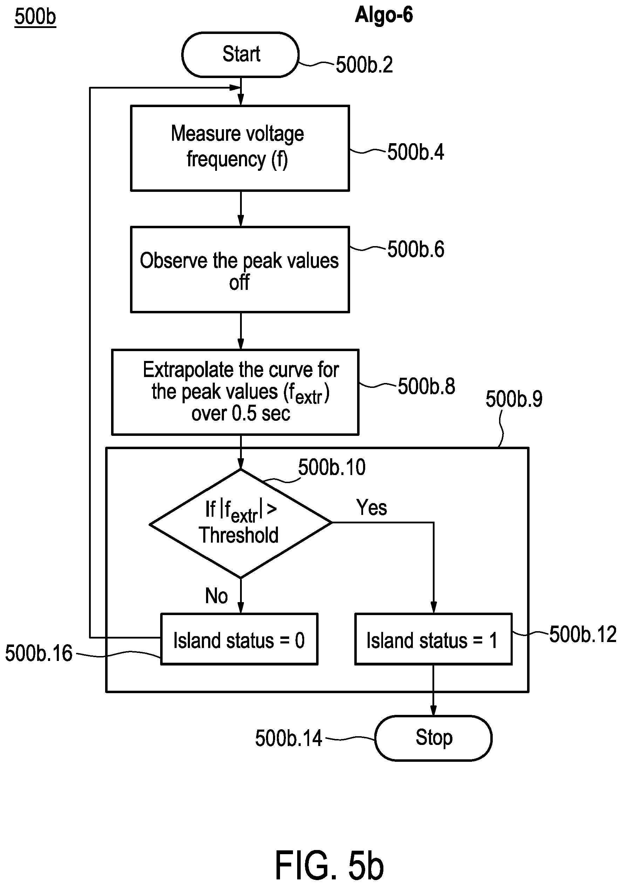

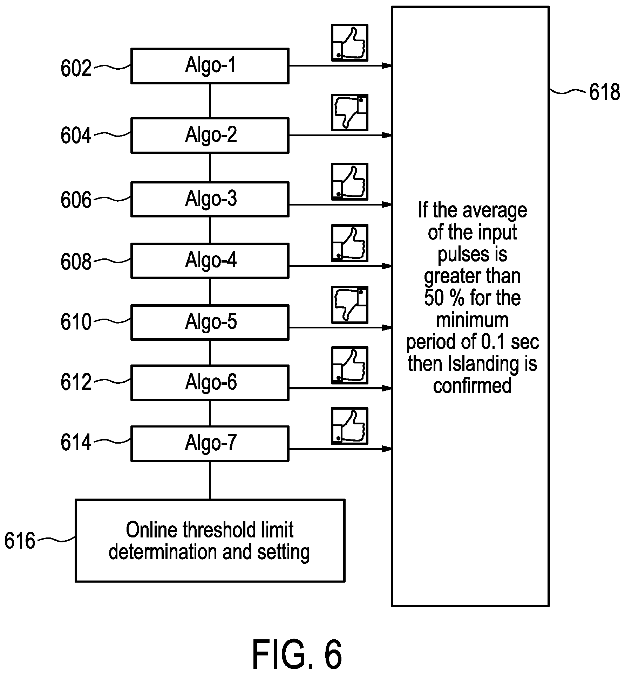

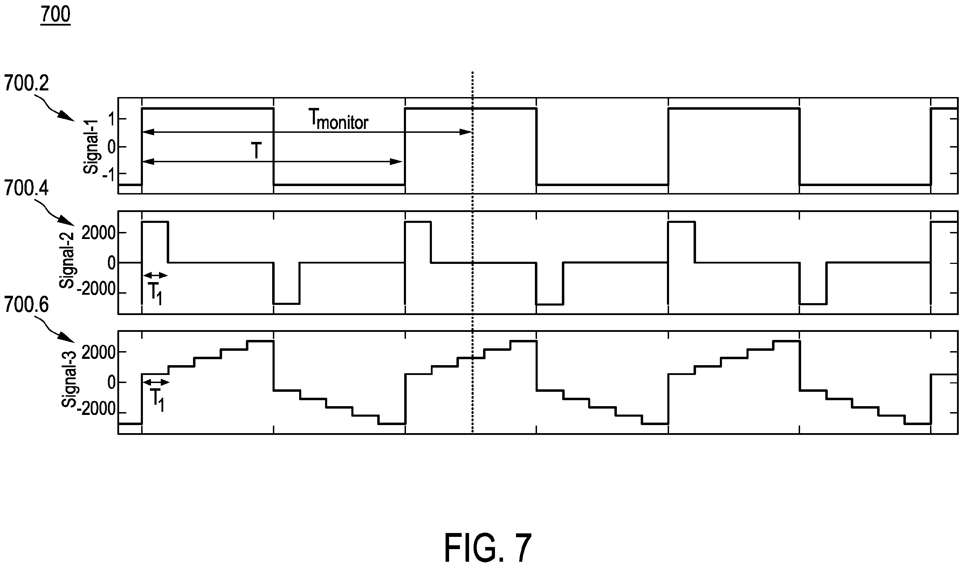

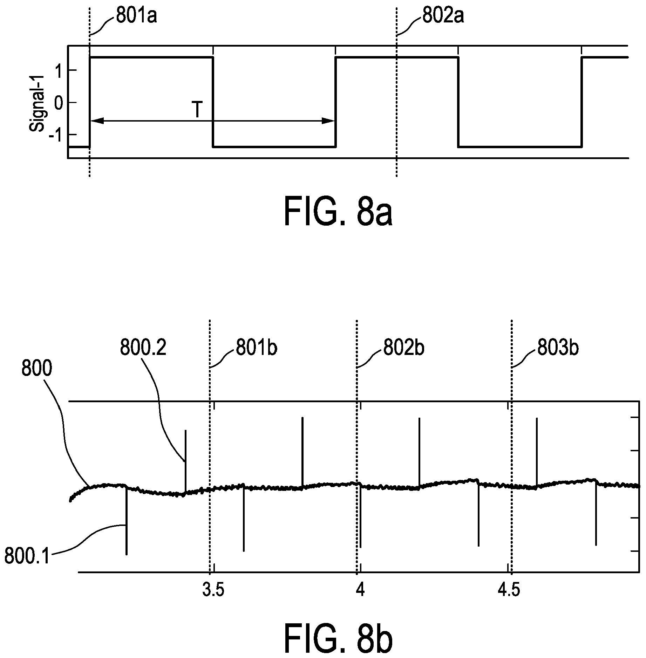

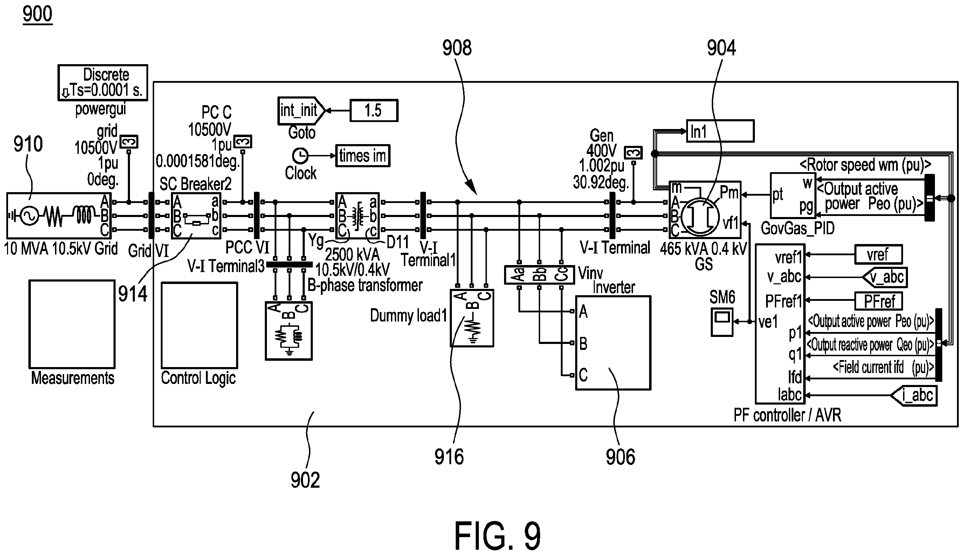

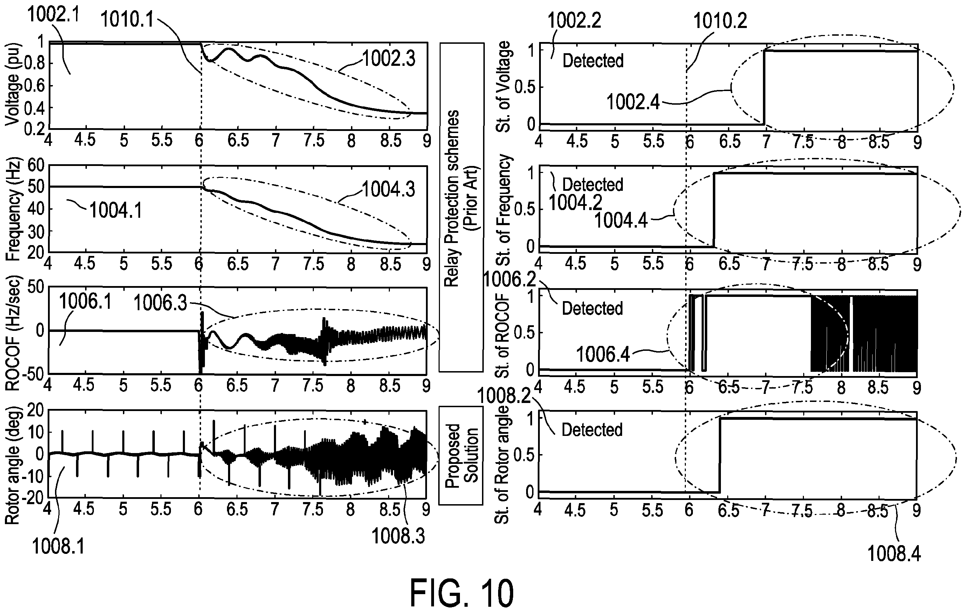

In the following, the method for detecting islanding of a distributed electrical power system executed by the islanding-detection arrangement 106 will be described in general (Fig. 2a, Fig. 2b) and in more detail with regard to certain preferred embodiments (Fig. 3a, Fig. 3b, Fig. 3c) and other embodiments (Fig. 4a, Fig. 4b, Fig. 5a, Fig. 5b) and with reference to a particular preferred embodiment of Fig. 6 - further Fig. 7 and Fig. 8a, Fig. 8b give more explanation. In Fig. 9 a simulation of a distributed electrical power system interruptibly coupled to a grid shown in Fig. 9 is depicted and the results of a comparative analysis of the algorithms established in a preferred embodiment is explained and shown with Fig. 10 to Fig. 13.

Fig. 2a shows the islanding-detection method 200 executed by the islanding-detection arrangement 106 for detecting islanding of the distributed-power system 102 of Fig. 1a and explained with a particular preferred embodiment of method 200a.

The method 200a starts with a terminal box 202. In a first step 204, a reactive-power signal having at least one probe-signal component of a specified kind is generated by the islanding-detection arrangement 106, which is coupled to the power connection 108. In a subsequent step 206, the reactive-power signal is injected into the power connection 108. Afterwards, in a step 208, a voltage of the distributed electrical power system 102 is measured at the power connection 108. Subsequently, in a step 210, at least one monitoring quantity is determined, which are indicative of a response of the distributed electrical power system 102 to the injected reactive-power signal and wherein at least one of the monitored quantities involves a quantity consisting of a second derivative with respect to time of the frequency of the measured voltage. Additionally, the at least one of the monitored quantities may further involve a quantity from the group consisting of :

a first derivative with respect to time of a voltage angle of the measured voltage, and a rotor angle of the at least one distributed electrical power generator.

Subsequently, to each of the one or more determined monitored quantity an islanding-identification algorithm 211a is applied, wherein a result of the islanding-identification algorithm 211a is indicative of whether the distributed electrical power system 102 is decoupled from the electrical power grid 110. Islanding-identification algorithm 211a may take on different forms; one of these is described in Fig. 2b. In the following, one particular embodiment of the islanding-identification algorithm 211a will be discussed with respect to Fig. 2b.

Fig. 2b shows for the islanding-detection method 200 a more elaborated embodiment 200b in combination with a particular islanding-detection algorithm 211. To that end, for elements of the method 200a of Fig. 2a that are also part of method 200b shown in Fig. 2b identical reference signs are used. Moreover, in the following, those elements will not be described again. Instead, for brevity, the description of Fig. 2b will be limited to the differences of the methods shown in Fig. 2a and Fig. 2b.

In the method 200b, an islanding-identification algorithm 211b comprising two steps is used. In a first step 212 of the algorithm 211b, time intervals during which the at least one monitored quantity exceeds a threshold value are identified within the monitoring time window.

In a subsequent step 214 of the algorithm 211b, a decision criterion is applied to the identified time intervals, wherein a result of applying the decision criterion to the identified time intervals is indicative of whether the distributed electrical power system 102 is decoupled from the electrical power grid 110.

In the following, the mandatory and two further alternative additional preferred embodiments of the method 200 will be described with reference to Fig. 3a, Fig. 3b and Fig. 3c, wherein each embodiment uses a monitored quantity consisting of the second derivative with respect to time of the frequency of the measured voltage to determine islanding. Additional monitored quantities are the first derivative with respect to time of the voltage angle of the measured voltage, and a rotor angle of the at least one distributed electrical power generator to determine islanding.

Fig. 3a shows a further preferred embodiment 300a of the method of Fig. 2a or Fig. 2b, wherein the at least one monitored quantity is a first derivative with respect to time of a voltage angle of the measured voltage. The embodiment 300a of the method of Fig. 3a is also referred to as "Algo-4".

All three figures of Fig. 3a, Fig. 3b and Fig. 3c focus on those steps of method 200 that follow step 208 concerning the injection of the reactive-power signal. Therefore, the method 300a is started with a step 300a.2 (Start) following the injection of the reactive-power signal into the power connection 108.

Subsequently, in a step 300a.4 (Measure voltage angle $V_{ang}$), a voltage is measured at the power connection 108, from which a voltage angle of the voltage generated by the distributed power generator 104 is derived. In a subsequent step 300a.6 (Calculate $dV_{ang}/dt$), a first derivative with respect to time of the voltage angle is calculated. Afterwards, starting with a step 300a.8 an islanding-identification algorithm 300a.7 is applied to the monitored quantity.

In the step 300a.8 (Count the pulses (N) for $| dV_{ang}/dt | >$ Threshold over 0.5sec), time intervals, also referred to as "pulses" in Fig. 3a, during which the absolute value $| dV_{ang}/dt |$ of the first derivative with respect to time of the voltage angle exceeds a threshold value labelled "Threshold" are identified and counted. In this embodiment the pulses are counted over a period of time of 0.5 sec, which corresponds to the time-window length. Subsequently, in a step 300a.10 (If N> 4), the decision criterion is applied.

In the method shown in Fig. 3a, if the number N of counted pulses exceeds four (If N> 4, Yes), the decision criterion indicates that the distributed electrical power system 102 is decoupled from the electrical power grid 110. This is indicated by a step 300a.12 labelled "Island status = 1". In this case, the algorithm stops with a step 300a. 14 (Stop). If the number of counted pulses does not exceed the threshold (If N> 4, No), the decision criterion indicates the distributed electrical power system is coupled --indicated by a step 300a.16 labelled "Island status = 0"-- to the electrical power grid 110. In this case, the algorithm returns to step 300a.4 for another execution - said return to step 300a.4 is indicated by a loop-arrow from step 300a.16 labelled "Island status = 0" back to step 300a.4 (Measure voltage angle Vang).

Fig. 3b shows the mandatory to the invention embodiment 300b of the method of Fig. 2a and Fig.2b, wherein the at least one monitored quantity is a second derivative with respect to time of a frequency of the measured voltage. The embodiment 300b is also referred to as "Algo-5".

The method 300b starts with a step 300b.2 (Start) after the reactive-power signal was injected into power connection 108. In a step 300b.4 (Measure voltage frequency f), the voltage at the power connection 108 is measured and a frequency of that voltage derived. In a subsequent step 300b.6 (Calculate $df^2/dt^2$), a second derivative with respect to time of the derived frequency is calculated. Afterwards, starting with a step 300b.8 an islanding-identification algorithm 300b.7 is applied to the monitored quantity.

In the step 300b.8 (Count the pulses (N) for $df^2/dt^2$ > Threshold over 0.5sec), time intervals, also referred to as pulses, during which the absolute value of the second derivative with respect to time of the frequency exceeds a threshold value labelled "Threshold" are identified and counted. The pulses are counted over a period of time of 0.5 sec, which corresponds to the time-window length. Subsequently, in a step 300b.10, the decision criterion is applied.

In the method 300b, if the number N of counted pulses exceeds four (If N> 4, Yes), the decision criterion indicates that the distributed electrical power system 102 is decoupled from the electrical power grid 110, which is indicated by a step 300b.12 labelled "Island status = 1". In this case, the algorithm stops with a step 300b.14 (Stop). If the number of counted pulses does not exceed the threshold (If N> 4, No), the decision criterion indicates the distributed electrical power system to be coupled --indicated by a step 300b.16 labelled "Island status = 0"-- to the electrical power grid 110. In this case, the algorithm returns to step 300b.4 which is indicated by a loop-arrow from step 300b.16 labelled "Island status = 0" back to step 300b.4 (Measure voltage frequency f).

Fig. 3c shows a preferred further embodiment 300c of the method of Fig. 2a or Fig. 2b, wherein the at least one monitored quantity is a rotor angle the distributed power generator 104. The embodiment 300c is also referred to as "Algo-7".

The method of Fig. 3c starts with a step 300c.2 after the reactive-power signal was injected into power connection 108 (Start). In a step 300c.4 (Measure rotor angle $\theta_{rotor}$), at best the voltage at the power connection 108 is measured and the rotor angle $\theta_{rotor}$ is derived. In an alternative embodiment of the method 3c, the rotor angle is not determined based on the measured voltage, but rather through a sensor directly at a given distributed electrical power generator.

In a subsequent step 300c.6, a difference ($\theta_{rotor\_pul} = \theta_{rotor} - \theta_{rotor\_avg}$) between the derived or "measured" or otherwise determined rotor angle $\theta_{rotor}$ and an average rotor angle $\theta_{rotor\_avg}$ is calculated. The average rotor angle $\theta_{rotor\_avg}$ is defined as that value which the rotor angle assumed on average during the time-window length. Afterwards, starting with a step 300c.8 an islanding-identification algorithm 300c.7 is applied to the monitored quantity.

In the step 300c.8 (Count the pulses (N) for $\theta_{rotor\_pul}$ > Threshold over 0.5sec), time intervals, also referred to as pulses, during which the absolute value of the difference between the measured rotor angle and the average rotor angle exceed a threshold value labelled "Threshold" are identified and counted. The pulses are counted over a period of time of 0.5 sec, which corresponds to the time-window length. Subsequently, in a step 300c.10, the decision criterion is applied.

In the method 300c, if the number of counted pulses exceeds two (If N> 2, Yes), the decision criterion indicates that the distributed electrical power system 102 is decoupled from the electrical power grid 110, which is indicated by a step 300c.12 labelled "Island status = 1". In this case, the algorithm stops with a step 300c.14 (Stop). If the number of counted pulses does not exceed the threshold (If N> 2, No), the decision criterion indicates the distributed electrical power system to be coupled to the electrical power grid 110, indicated by a step 300c.16 labelled "Island status = 0". In this case, the algorithm returns to step 300c.4, which is indicated by a loop-arrow from step 300c.16 labelled "Island status = 0" back to step 300c (Measure rotor angle $\theta_{rotor}$).

In Fig. 3a to Fig. 3c, the embodiments 300a, 300b, and 300c use an identical decision criterion, which compares the number of counted pulses with a pre-determined number. However --in other embodiments of the method 200 of Fig. 2a or Fig. 2b-- other decision criteria are possible as well. Alternative decision criteria are described with reference to Figs. 4a to Fig. 4b and Fig. 5a to Fig. 5b, which show methods which can be used as part of method 200 for determining islanding based on monitored quantities other than the second derivative with respect to time of the frequency, the first derivative with respect to time of the voltage angle, and the rotor angle.

Fig. 4a shows a method 400a using a first derivative with respect to time of the measured frequency as the monitored quantity. The method 400a shown in Fig. 4a is also referred to as "Algo-2".

The method of Fig. 4a starts with a step 400a.2 (Start) after the reactive-power signal was injected into power connection 108. In a step 400a.4 (Measure voltage frequency f), the voltage at the power connection 108 is measured and the frequency f of the measured voltage is derived. In a subsequent step 400a.6 (Calculate df/dt), a first derivative with respect to time of the frequency is calculated as the monitoring quantity. The first derivative with respect to time of the frequency is also commonly referred to as rate of change of frequency (ROCOF). Afterwards, starting with a step 400a.8 an islanding-identification algorithm 400a.7 is applied to the monitored quantity.

In the step 400a.8 (Observe the cumulative time $T_{cum}$ of df/dt|> Threshold over 0.5sec) a cumulated time "$T_{cum}$" of time intervals is computed which the absolute value of the ROCOF exceeds a threshold value labelled "Threshold" in Fig. 4a. Calculating the cumulated time "$T_{cum}$", only those time intervals are included which occurred over a period of time of 0.5 sec, which corresponds to the time-window length. Subsequently, in a step 400a. 10 (If $T_{cum}$ > 0.25), the decision criterion is applied.

In the method 400a, if the cumulated time exceeds 0.25s, the decision criterion indicates that the distributed electrical power system 102 is decoupled from the electrical power grid 110, which is indicated by a step 400a. 12 labelled "Island status = 1". In this case, the algorithm stops with a step 400a. 14 (Stop). If the cumulated time does not exceed the threshold (If $T_{cum}$ > 0.25, No), the decision criterion indicates the distributed electrical power system to be coupled to the electrical power grid 110, indicated by a step 400a.16 labelled "Island status = 0". In this case, the algorithm returns to step 400a.4, which is indicated by a loop-arrow from step 400a.16 labelled "Island status = 0" back to step 400a.4.

Fig. 4b shows a method using a first derivative with respect to time of the magnitude of the voltage as the monitored quantity. The method 400b shown in Fig. 4b is also referred to as "Algo-3".

The method of Fig. 4b starts with a step 400b.2 (Start) after the reactive-power signal was injected into power connection 108. In a step 400b.4 (Measure voltage magnitude), the voltage at the power connection 108 is measured and the magnitude of the measured voltage Vmag is derived. In a subsequent step 400b.6 (Calculate dDVmag/dt), a first derivative with respect to time of the magnitude of the voltage is calculated as the monitoring quantity. Afterwards, starting with a step 400b.8 an islanding-identification algorithm 400b.7 is applied to the monitored quantity.

In the step 400b.8 (Observe the cumulative time $T_{cum}$ of |dVmag/dt| > Threshold over 0.5sec), a cumulated time "$T_{cum}$" of time intervals is computed, in which the absolute value of the monitored quantity exceeds a threshold value labelled "Threshold" in Fig. 4b. Calculating the cumulated time "$T_{cum}$", only those time intervals are included which occurred within a time-window length of 0.5 sec. Subsequently, in a step 400b.10 (If $T_{cum}$ > 0.25), the decision criterion is applied.

In the algorithm shown in Fig. 4b, if the cumulated time exceeds 0.25s (If $T_{cum}$ > 0.25, Yes), the decision criterion indicates that the distributed electrical power system 102 is decoupled from the electrical power grid 110, which is indicated by a step 400b.12 labelled "Island status = 1". In this case, the algorithm stops with a step 400b.14 (Stop). If the cumulated time does not exceed the threshold (If $T_{cum}$ > 0.25, No), the decision criterion indicates the distributed electrical power system to be coupled to the electrical power grid 110, indicated by a step 400b.16 labelled "Island status = 0". In this case, the algorithm returns to step 400b.4, which is indicated by a loop-arrow from step 400b.16 labelled "Island status = 0" back to step 400b.4.

Fig. 5a shows a method 500a using a frequency of the measured voltage as the monitored quantity. The method 500a shown in Fig. 5a is also referred to as "Al-go-1".

The method 500a starts with a step 500a.2 (Start) after the reactive-power signal was injected into power connection 108. In a step 500a.4 (Measure voltage frequency (f)), the voltage at the power connection 108 is measured and the frequency f of the measured voltage is derived as the monitored quantity. Afterwards, starting with a step 500a.6 (If f> $f_{max}$ for 0.5sec) and follow up of step 500a.8 (If f < $f_{min}$ for 0.5sec) an islanding-identification algorithm 500a.5 is applied -in this case comprising two decisions in step 500a.6, 500a.8-- to the monitored quantity.

In the step 500a.6 (If f > $f_{max}$ for 0.5sec), which forms a first step of a decision criterion, the monitored quantity is compared to an upper threshold for the frequency labelled "$f_{max}$". If the monitored quantity exceeds the upper threshold $f_{max}$ for 0.5 sec, the decision criterion indicates that the distributed electrical power system 102 is decoupled from the electrical power grid 110 (If f > $f_{max}$ for 0.5sec, Yes), which is indicated by a step 500a.10 labelled "Island status = 1". In this case, the algorithm stops with a step 500a.12 (Stop).

If the monitored quantity does not exceed the upper threshold $f_{max}$ for 0.5 sec (If f > $f_{max}$ for 0.5sec, No), the monitored quantity is compared with a lower threshold labelled "$f_{min}$". If the monitored quantity exceeds the lower threshold $f_{min}$ for 0.5 sec (If f < $f_{min}$ for 0.5sec, Yes), the decision criterion again is lead to indicate in the step 500a.10 (Island status = 1) that the distributed electrical power system 102 is decoupled from the electrical power grid 110. Also in this case, the algorithm stops with a step 500a.12 (Stop).

Otherwise (If f < $f_{min}$ for 0.5sec, No), the decision criterion indicates in a step 500a.14 (Island status = 0) that the distributed electrical power system 102 is not decoupled. Then, the algorithm continues with the step 500a.4, which is indicated by a loop-arrow from step 400b.16 labelled "Island status = 0" back to step 500a.4.

Fig. 5b shows a method using a peak frequency of frequency of the measured voltage as the monitored quantity. The method 500b shown in Fig. 5b is also referred to as "Algo-6".

The method of Fig. 5b starts with a step 500b.2 (Start) after the reactive-power signal was injected into power connection 108. In a step 500b.4 (Measure voltage frequency (f)), the voltage at the power connection 108 is measured and the frequency f of the measured voltage is derived. Subsequently, in a step 500b.6 (Observe the peak values of f), peaks of the frequency f of the measured voltage are identified. In a step 500b.8 (Extrapolate the curve for the peak values ($f_{extr}$) over 0.5sec), a frequency extremum "$f_{extr}$" is determined as the monitored quantity. The frequency extremum $f_{extr}$ is determined using extrapolation for each peak identified within a time-window length of 0.5 sec. Subsequently, a decision criterion is applied to the frequency extremum $f_{extr}$ in a part of the algorithm labelled 500b.9.

For applying the decision criterion in a step 500b.10 (If $|f_{extr}|$ > Threshold) of the decision criterion, an absolute value $|f_{extr}|$ of the monitored quantity is compared with a threshold labelled "Threshold" in Fig. 5b.

If the absolute value of the monitored quantity exceeds the threshold (If $|f_{extr}|$ > Threshold, Yes), the decision criterion indicates that the distributed electrical power system 102 is decoupled from the electrical power grid 110, which is indicated by a step 500b.12 labelled "Island status = 1". In this case, the algorithm stops with a step 500b.14 (Stop).

If the absolute value $|f_{extr}|$ of the monitored quantity does not exceed the threshold (If $|f_{extr}|$ > Threshold, No),

the decision criterion indicates in a step 500b.16 (Island = 0) that the distributed electrical power system 102 is not decoupled. Then, the algorithm continues with the step 500b.4, which is indicated by a loop-arrow from step 500b.16 labelled "Island status = 0" back to step 500b.4.

As has already been indicated in the description of the method 200 of Fig. 2a or Fig. 2b, also a plurality of monitored quantities can be used to determine whether a distributed electrical power system is islanding. Such a method will be described in the following with reference to Fig. 6.

Fig. 6 shows an alternative embodiment 600 of the method of Fig. 2a or Fig. 2b, wherein a plurality of monitored quantities derived from the measured voltage are used to determine whether a distributed electrical power system is islanding. The method 600 combines the methods "Algo-1" to "Algo-7" in a sequence, which were described above with regard to Fig. 3a to Fig 5b, for a single method 200.

Corresponding to the method 200, the method starts with generating a reactive-power signal having at least one probe-signal component of a specified kind by the islanding-detection arrangement 106. Subsequently, the reactive-power signal is injected into the power connection 108 by the islanding-detection arrangement 106. In a following step, a voltage of the distributed electrical power system 102 is measured at the power connection 108.

Afterwards, the methods "Algo-1" to "Algo-7", labelled in Fig. 6 with 602, 604, 606, 608, 610, 612, and 614, respectively, are executed to analyse the measured voltage. As a result, seven different monitored quantities are derived from the measured voltage. The seven algorithms indicate independently of each other whether the distributed electrical power system 102 is decoupled from electrical power grid 110, which is indicated by the "thumb symbols" of Fig. 6. In the example shown in Fig. 6, "Algo-1", "Algo-3", "Algo-4", "Algo-6", and "Algo-7" indicate that the distributed electrical power system 102 is coupled to the electrical power grid 110, while "Algo-2" and "Algo-5" indicate that the distributed electrical power system 102 is decoupled.

In a final step 618, the indications of the algorithms are evaluated with regard to a certain criterion ("If the average of the input pulses is greater than 50% for the minimum period of 0.1 sec then Islanding is confimed"). In the example, an islanding is only indicated by the algorithm 600, if more than half of the algorithms indicate an islanding for a period of time greater than 0.1 sec. In other embodiments, different periods of time as well as different percentages of the monitored quantities indicating an islanding are used for the evaluation.

In embodiments of the method 600, the threshold level used by the different algorithms is set to a pre-determined value. However, in the embodiment shown in Fig. 6, the threshold level is determined using an online-monitoring procedure indicated by a step 616 ("Online threshold limit determination setting"). Using the online-monitoring procedure to set the threshold values is particularly advantageous, because peak values of the amplitudes of the monitored quantities depend on a load of the distributed electrical power system 102. During the online-monitoring procedure, the peak values, in particularly those of pulses of the second derivative with respect to time of the frequency, the first derivative with respect to time of the voltage angle, and the rotor angle in a grid-connected mode, are continuously monitored. The threshold limit will be chosen a little bit higher than the peak values monitored during the grid-connected mode. In the example shown in Fig. 6, the threshold values are chosen 20% higher than measured peak values. Once a peak values surpasses a threshold value, the online monitoring procedure is at least temporarily paused until it is verified that the distributed electrical power system is still connected to the grid. The online-monitoring procedure can also be used only for a single monitored quantity.

An important part of the detection of an islanding of the distributed electrical power system 102 is the generation and injection of the reactive-power signal and the matching of the parameters for analysing the at least one monitored quantity. In the following, the reactive-power signal and the matching of the parameters is described in more detail with reference to Fig. 7 to Fig. 8b.

Fig. 7 shows an embodiment of the reactive-power signal 700 comprising three probe-signal components 700.2, 7004, and 700.6 for "Signal-1", "Signal-2" and "Signal-3" respectively; each in arbitrary units of a voltage on vertical axis.

The reactive-power signal 700 is injected into the power connection 108 and is used as a probe signal to determine, if the disturbance introduced by the injected reactive-power signal can be compensated. If the distributed electrical power system 102 is coupled the electrical power grid 110, the disturbance is compensated. However, if the distributed electrical power system 102 is islanding, the disturbance pushes features, e.g. voltage magnitude and frequency, of the voltage at the power connection 108 towards other values, which is then detected by the methods described above.

In the example shown in Fig. 7, the reactive-power signal 700 comprises three probe-signal components 700.2, 700.4, and 700.6 illustrated in three different graphs in Fig. 7. The probe-signal components 700.2, 700.4, and 700.6 are periodic functions with a period length "T". Each probe-signal component comprises characteristic features, which are particularly advantageous to probe, whether the distributed electrical power system 102 is decoupled from the electrical power grid 110.

The probe-signal component 700.2, also labelled "Signal-1", is a square-wave function. The probe-signal component 700.2 assumes a positive value during a first half of the period "T" and an opposite negative value during a second half of the period "T", wherein changes between the positive and the negative value are characterized by either steeply rising or falling edges. The probe-signal component "Signal-1" introduces sudden spikes in the voltage and, as a result, pushes control parameters, e.g. $df/dt$, $d^2f/dt^2$ or others as mentioned above, of the distributed electrical power generator 104 to near threshold values. In the example shown in Fig. 7, the reactive power of the probe-signal component 700.2 is equivalent to 5% of the real power generated by the distributed electrical power generator 104 during a period of the probe-signal component 700.2.

The probe-signal component 700.4, also labelled "Signal-2", also is a square-wave function. The probe-signal component 700.4 assumes for a time span "T1" at the beginning of the first half of the period "T" a positive value and for the remaining part of the first half of the period "T" zero. At the beginning of the second half of the period "T", the probe-signal component 700.4 assumes for the time span "T1" an opposite negative value and for the remaining part of the second period "T" zero. The probe-signal component "Signal-2" creates sudden spikes in the voltage signal in addition to those created by the probe-signal component "Signal-1". Moreover, the relative position between the probe-signal component "Signal-1" and the probe-signal component "Signal-2" can be shifted, which shifts the spikes. In the example shown in Fig. 7, the reactive power of the probe-signal component 700.4 is equivalent to 2.5% of the real power generated by the distributed electrical power generator 104 during a period of the probe-signal component 700.4.

The probe-signal component 700.6, also labelled "Signal-3", is a step function with a pre-determined step height and a step width equal to the time span "T1". The probe-signal component 700.6 assumes during first time span "T1" starting at the beginning of the first half of the period "T" a value equal to the one time the pre-determined step height. After the time span "T1", the probe-signal component 700.6 assumes a value of twice the value of the pre-determined step height during another time span "T1". This step-wise increase of the value of the probe-signal component 700.6 is continued for another three time spans. Afterwards, during another tie span "T1" at the beginning of the second half of the period "T", the probe-signal component 700.6 assumes a value of one time the negative of the pre-determined step height. During the following time span "T1", this value is decreased to two times the negative of the pre-determined step height. This step-wise decrease of the value of the probe-signal component 700.6 is continued until the end of the second half of the period "T", which results in an decrease of the value of the probe-signal component 700.6 of five times the negative value of the pre-determined step height. The probe-signal component "Signal-3" introduces small perturbations into the voltage and, as a result, progressively pushes the frequency to above-threshold values.

In the example shown in Fig. 7, the reactive power of the probe-signal component 700.6 is equivalent to 2.5% of the real power generated by the distributed electrical power generator 104 during a period of the probe-signal component 700.6.

In the example shown in Fig. 7, the time-window length "$T_{monitor}$" is also shown for "Signal-1", "Signal-2" and "Signal-3"; each in arbitrary units on vertical axis.

The time-window length "$T_{monitor}$" is set to 0.5 sec, which is equal to a delay time of an under/over voltage protection scheme, an under/over frequency protection scheme and a ROCOF protection scheme.

The period length "T" of the square wave is flexible, but should be chosen at least 1 cycle (0.02sec for 50 Hz) less than the monitoring time window for an effective determination of an islanding. In the example given here, the a safety margin of 5 cycles (equal to 0.1sec) was chosen. Therefore, the period length "T" is equal 0.4 sec.

The time span "T1" is chosen as 2 cycles of 50 Hz, i.e. 0.04 sec, to ensure the injection of intended reactive power by the islanding-detection arrangement 106, which takes into count of controller dynamics and electrical transients. However, in other embodiments, "T1" is set to a value between 0.04sec and T/2. In general, for reasons of the controller dynamics and electrical transients, it is advisable to set "T1" to values that are multiples of 2 cycles periods of 50Hz.

In the following, it is explained for the rotor angle with reference to Fig. 8a and Fig. 8b, how the decision criteria, threshold, and the time-window length are determined. Fig. 8a shows again the probe-signal component "Signal-1" together with the time-window length "$T_{monitor}$". Shown in Fig. 8a is the probe-signal component "Signal-1" over a plurality of periods "T". Moreover, Fig. 8a sets a period length of the probe-signal component "Signal-1" into perspective of the single time-window length indicated by two markers 801a and 802a. As can be seen from Fig. 8a, an interval with a length of a single time-window length of the probe-single component "Signal-1" comprises in total either two or three rising and falling edges, which cause disturbances of the value of the rotor angle, which is shown in Fig. 8b.

Fig. 8b shows the rotor angle 800 ($\theta_{rotor}$) as a function of time together with marks identifying the time-window length. The rotor angle 800 is shown as a function of time. Characteristic for the rotor angle are periodic impulses, e.g. impulse 800.1 and impulse 800.2, that are created in response of the rising and falling edges of the probe-signal component "Signal-1". As can be seen from the markers 801b, 802b, and 803b indicating the time-window length, during a time interval with a length equivalent to a single time-window length, the rotor angle includes up to a maximum of three impulses, which can be observed, when the distributed electrical power system 102 is disconnected to the grid 110, but also when it is connected to the grid 110. However, the amplitude of the impulses increases, when the distributed electrical power system 102 is decoupled from the electrical power grid 110. Therefore, in the example, the distributed electrical power system 102 is identified to be islanding, if two intervals within a single time-window length are identified during which the rotor angle exceeds a given threshold.

In the following, the effectiveness of the algorithm shown in Fig. 3c ("Algo-7") will be discussed with reference to Fig. 9 to Fig. 13.

Each of the four figures illustrates the effectiveness of method "Algo-7" in comparison to three commonly used relay protection schemes. The effectiveness of method "Algo-7" was tested under four different scenarios (Scen.No. 1 to Scen.No. 4). The four different scenarios are given in Tab. 1 and are defined based on the difference in real power $\Delta P$ and reactive power $\Delta Q$ between the distributed electrical power generator 106 and the local load 116. The real power $\Delta P$ is defined as

$$\Delta P = P_{gen} - P_{load,}$$

wherein $P_{gen}$ is the real power generated by the distributed electrical power generator 106 and $P_{load}$ is the real power consumed by the local load 116. Furthermore, the difference in reactive power $\Delta Q$ is defined as

$$\Delta Q = Q_{gen} - Q_{load,}$$

wherein $Q_{gen}$ is the reactive power generated by the distributed electrical power generator 106 and $Q_{load}$ is the reactive power consumed by the local load 116.

As indicated by the algebraic sign of $\Delta P$ and $\Delta Q$, in scenario no. 1 and scenario no. 4 the demand for real and reactive power of the local load is larger than that provided by the electrical distributed generator, while the opposite is true for the other two scenarios.

Furthermore, scenario no. 3 and scenario no. 4 are close to the so-called non-detection zone, where an islanding would not be detected by other protection device known in the prior art. In particular, method 300c can still operate by a mismatch of 0.09 PU in the real power and 0.02 PU in the reactive power. In the examples given in Tab. 1, the pu base unit refers to 465.00kVA.

Tab. 1: Scenarios for validation of the algorithm shown in Fig. 3c.

| Scen.No. | Difference in real power $\Delta P$ (pu) | Difference in reactive Power $\Delta Q$ (pu) | Remarks |
|---|---|---|---|
| 1 | -0.54 | -0.33 | Generation smaller than demand |
| 2 | 0.63 | 0.39 | Generation larger than demand |
| 3 | 0.09 | 0.02 | Generation larger than demand, close to non-detection zone |
| 4 | -0.09 | -0.02 | Generation smaller than demand, close to non-detection zone |

The comparison between method 300c and the protection methods of the prior art were performed based on data generated by a respective setup 900 of a simulation of a distributed electrical power system interruptibly coupled to a grid as schematically shown in Fig. 9.

Realtime hardware tests have also been performed, but are not shown here. Fig. 9 shows the respective setup 900 for the simulation of the three-phase distributed electrical power system 902 interruptibly coupled to an electrical power grid 910, which is described herein below; more particular as shown as a three-phase (A,B, C) distributed electrical power system 902. The distributed electrical power system 902 is interruptibly connected to the electrical power grid 910 which in this case of setup 900 is adapted to be operated at a voltage of 10 kV for a power of 10 MVA.

As can be seen from the distributed electrical power system 902 comprises a synchronous distributed electrical power generator 904 and a local load 916; namely the dummy load indicated at the power connection 908 and further transformed load as both are shown side by side to the phase transformer; the parameters thereof with specs are plotted into Fig. 9. Respective clock times and inits are also shown for good order as parameters.

The distributed electrical power generator 904 generates at 0.4 kV a power of 465 kVA; specs of a generator control and generator parameters (like rotor speed, output active and reactive power, fields, field current, frequencies and the like) are depicted on the right hand side of the graph which are not commented here.

Furthermore, the distributed electrical power system 902 comprises islanding-detection arrangement 906 with an inverter setting of a converter unit 106.2.2, namely as indicated in Fig. 1a with respect to appropriate DC/AC converters. A respective Battery/Capacitor setting of an energy-storage unit 106.2.1 of Fig. 1a is not shown in detail here. The islanding-detection arrangement 906 is configured to inject into the power connection 908 a reactive-power signal which consists of the probe-signal component labelled "Signal-1" in Fig. 7; a respective "control logic" of an anti-islanding controller 106.1 as shown in Fig. 1a is also shown here in Fig. 9.

Moreover, the distributed electrical power system comprises a relay-protection unit 914, which in this case is configured as a SC Breaker with specs as plotted into Fig. 9. The relay-protection unit 914 with "control logic" and inverter setting comprises three relay-protection mechanisms that the method "Algo-7" is compared against.

Fig. 9 also depicts respective interfaces respectively connection points depicted as "Terminal" between the generator 904 and a local load 916 (namely the dummy load indicated at the power connection 908 and further transformed load net to the transformer) in the power system 902; Fig. 9 also depicts interface as a "PCC" and the grid connection point depicted as "Grid" on respective sides of the SC Breaker to the grid and the transformer respectively. The interfaces respectively connection points are shown as commonplace and are not commented in detail here.

The three relay-protection mechanisms are summarized in Tab. 2. A first relay-protection mechanism checks whether the magnitude of the voltage measured at the power connection 908 lies in an interval between 0.8 V and 1.19 V. A second relay-protection mechanism checks whether the frequency of the measured voltage lies between a lower threshold value of 47 Hz and an upper threshold value of 52 Hz. In a third relay-protection mechanism, a first derivative with respect to time of the frequency of voltage measured at the power connection 908, also referred to as rate of change of frequency (ROCOF), is checked to be smaller than 1 Hz/s. These are referred to below as the three relay-protection mechanisms.

Tab. 2: Common relay-protection mechanisms that the method "Algo-7" is compared against.

| Voltage | Frequency | ROCOF |
|---|---|---|
| lower threshold: 0.8 V, upper threshold: 1.19 V | lower threshold: 47 Hz, upper threshold: 52 Hz | upper threshold: 1 Hz/sec |

The parameters used for the method "Algo-7" are listed in Tab. 3. The impulse amplitude thresholds were determined using the online-monitoring procedure. The threshold differ from one another due to different load conditions used in the three scenarios.

Tab. 3: Parameters used for method "Algo-7" for the simulations of the different scenarios.

| Scenario no. | Method "Algo-7" (rotor angle) |
|---|---|
| 1 | N = 2, Impulse amplitude threshold = 11 |
| 2 | N = 2, Impulse amplitude threshold = 14 |
| 3 | N = 2, Impulse amplitude threshold = 14 |
| 4 | N = 2, Impulse amplitude threshold = 12 |

The results are observed in a measurement unit also shown as "measurements". For scenario no. 1, the results of the comparison are shown in Fig. 10, which will be described in the following. Fig. 10 shows a performance comparison of prior art relay-protection mechanisms and method "Algo-7" for scenario no. 1 of Tab. 1.

In graphs 1002.1, 1004.1, and 1006.1, the quantities magnitude, the frequency, and ROCOF of the voltage at power connection 908, which are each monitored by one of the relay-protection mechanism, are shown as a function of time during the simulation. Furthermore, binary graphs 1002.2, 1004.2, and 1006.2 shown whether a monitored quantity exceeds a threshold, indicated by a "1", or stays within the limits of the threshold, indicated by a "0". An islanding is detected, if a threshold is exceeded for at least 0.5sec.

Until a time of 6 sec, which is marked with dashed lines 1010.1 and 1010.2 in the graphs, the distributed electrical power system 902 is coupled to the electric power grid. At the time of 6 sec, the power connection is interrupted and stays interrupted until the end of the simulation.

As can be seen from the graphs 1002.1, 1004.1, and 1006.1, the monitored quantities assume a constant value in the time interval up to the time of 6 sec. Afterwards, due to the missing stabilizing effect of the electrical power grid 910 on the distributed electrical power system 902, the voltage and the frequency decline as highlighted by circles labelled 1002.3, 1004.3 and the ROCOF begins to oscillate as highlighted by a circle labelled 1006.3. As can be seen by a change from value 0 to value 1 in the binary graph 1002.2 highlighted by circle 1002.4, the magnitude of the measured voltage exceeds the lower threshold at around a time of 7 sec. Shown in the binary graph 1004.2 by a switching from value 0 to value 1 highlighted by a circle 1004.4, the frequency exceeds the lower threshold at around a time of 6.4sec. Due to strong oscillations of the ROCOF, the ROCOF already exceeds the threshold less than 1/10 sec after the decoupling distributed electrical power system 902 from the electrical power grid 910, but then falls below the threshold, which is indicated by the oscillations in the binary graph 1008.2 However, as highlighted in the binary graph 1008.2 by circle 1008.4, during one stretch of time the threshold is continuously exceeded for more than 0.5sec, which leads to a detection of the islanding.

Therefore, all three relay-protection mechanisms are able to detect the islanding of the distributed electrical power system 902.

In graph 1008.1, the rotor angle, which is monitored by method "Algo-7" is shown as a function of time. The rotor angle assumes the characteristic functional dependence as already described with reference to Fig. 8b, which comprises periodically occurring impulses. As can be seen in graph 1008.1, the absolute value of the magnitude of those impulses continuously increases after the distributed electrical power system 908 is decoupled from the electrical power grid 910 as is highlighted by a circle labelled 1008.3. Due to the increase of the absolute value of the magnitude of the impulses, the islanding of the distributed electrical power system 902 is detected at around a time of 6.4 sec by the method "Algo-7", as shown in graph 1008.2, which switches from value 0 to value 1 as highlighted by circle 1008.4. Thus, oscillations of the rotor angle shown in graph 1008.1 and highlighted by circle 1008.3, lead to a correct detection of the islanding using "Algo-7",

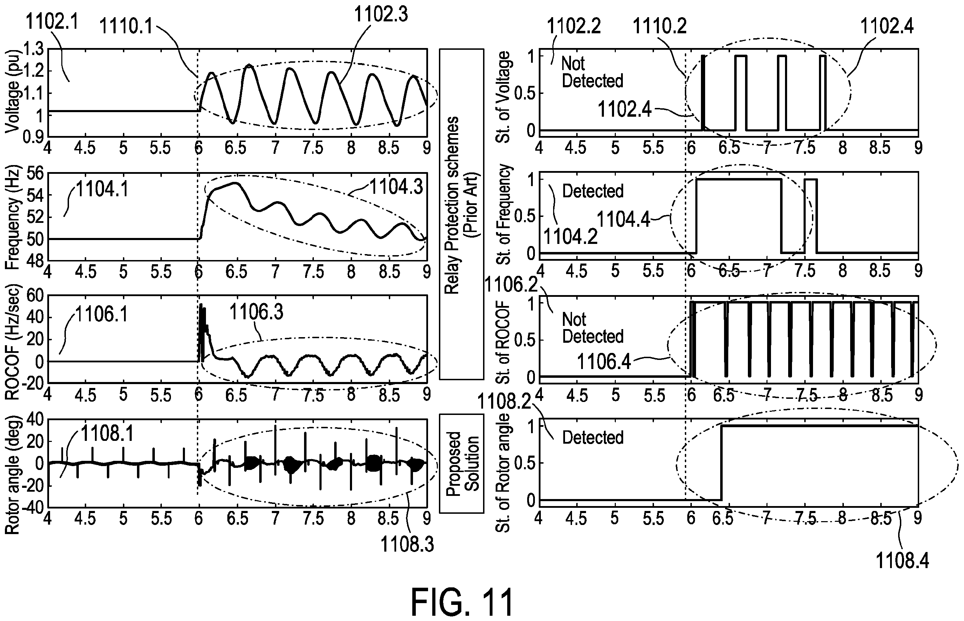

In the following, the simulation of scenario no. 2 will be discussed with reference to Fig. 11. Fig. 11 shows a performance comparison of prior art relay-protection mechanisms and method "Algo-7" for scenario no. 2 of Tab. 1.

In graphs 1102.1 1104.1 1106.1 and 1108.1, the monitored quantities of the relay-protection mechanisms as well as the monitored quantity of method "Algo-7" are shown as a function of time during the simulation. Also in this scenario, the distributed electrical power system 902 is decoupled from the electrical power grid 910 at the time of 6 sec, which is marked by dashed lines 1110.1 and 1110.2. As can be seen from those the graphs 1102.1 1104.1 1106.1 and 1108.1, the decoupling of the distributed electrical power system 902 from the electrical power grid 910 leads to variations of the monitored quantities. As highlighted by circle 1102.3, the magnitude of the voltage shown in graph 1102.1 highly fluctuates. Moreover, oscillations of the value of the frequency and value of the ROCOF as highlighted by circles 1104.3 and 1106.3, respectively, can also be seen. Yet, in contrast to scenario no. 1, those variations do not necessarily lead to a correction identification of the islanding for all relay-protection mechanisms. Highlighted by circle 1102.4, the oscillations of the magnitude of the voltage lead to spikes in the binary graph 1102.2, however, which do not exceed 0.5sec and, therefore, do not lead to a detection of the islanding. The same is true for the ROCOF, which also only leads to temporary spikes highlighted by circle 1106.4 in graph 1106.2. Only the oscillations of the frequency lead to a change in the binary graph from 0 to 1, which holds for long enough such that an islanding is detected, and which is highlighted by circle 1104.4.

In contrast, oscillations of the rotor angle shown in graph 1208.1 and highlighted by circle 1308.3, lead to a correct detection of the islanding using "Algo-7", which is indicated by the change of value from 0 to 1 shown in the binary graph 1308.2 and is highlighted by circle 1308.4.

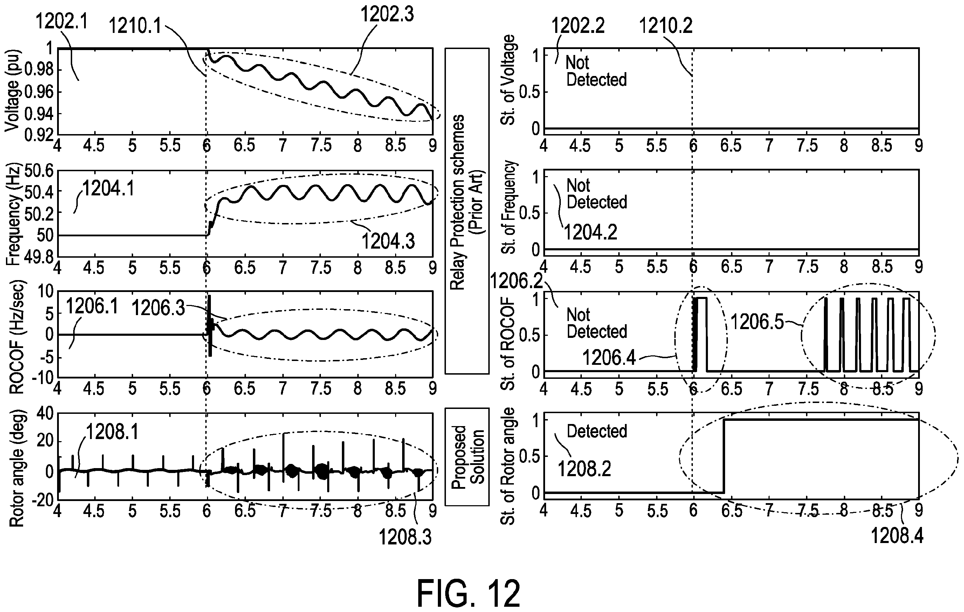

In the following, the simulation of scenario no. 3 will be discussed with reference to Fig. 12. Fig. 12 shows a performance comparison of prior art relay-protection mechanisms and method "Algo-7" for scenario no. 3 of Tab. 1. A time when the distributed electrical power system 902 is decoupled from the grid 910 is indicated by dashed lines 1210.1 and 1210.2.

In scenario no. 3, the difference in real power ΔP and reactive power ΔQ is significantly smaller than in the first two scenarios. This reduced difference is particularly visible in graphs 1202.1, 1204.1, and 1206.1, which show the quantities monitored by the relay-protection mechanisms. Due to the small difference in real power ΔP and reactive power ΔQ, the variations caused by the islanding of the distributed electrical power system 902 are much smaller than those displayed in Fig. 10 and Fig. 11. This is particularly visible in graphs 1202.1 and 1204.1, which show an oscillation of the voltage and frequency, highlighted by circles 1202..3 and 1204.3, respectively, wherein the relative magnitude of the oscillations to the value taken on before the islanding became effective is in the single percentage range. As a result, no change in value from 0 to 1 is shown in the binary graphs 1202.2 and 1204.2 and, therefore, no islanding is detected.

Moreover, also oscillations of the ROCOF shown in graph 1206.1 and highlighted by circle 1206.3 are smaller than in the previous scenarios. As a result, in the binary graph 1206.2, a few spikes, highlighted by circles 1206.4 and 1206.5, are visible, but those spikes are too short such that a detection of the islanding is detected.

Again, in contrast, the increased spiking of the rotor angle shown in the graph 1208.1 and highlighted by circle 1208.3 is large enough such that an islanding is detected using method "Algo-7", which is indicated by the binary graph switching from value 0 to value 1, which is highlighted by a circle 1208.4.

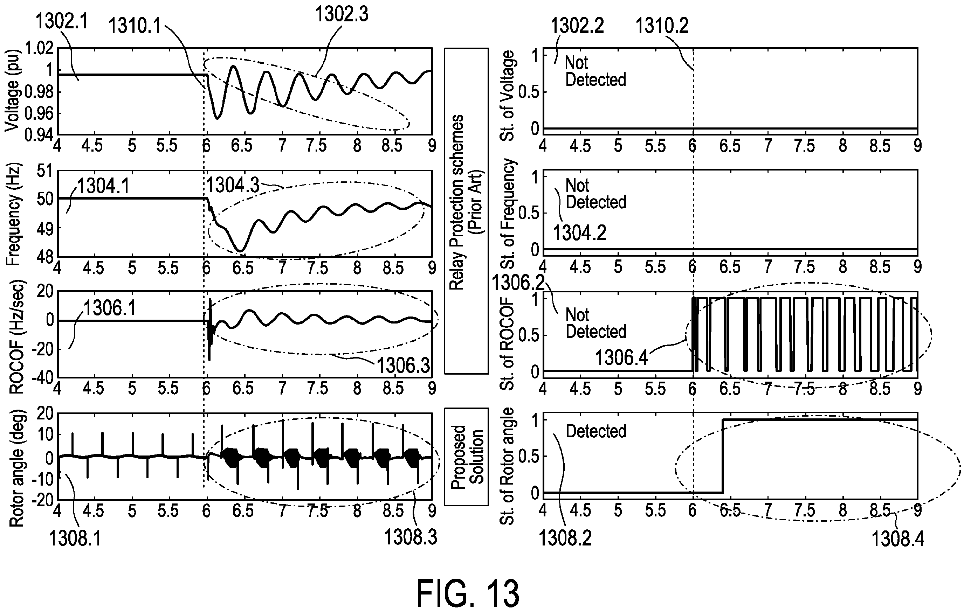

Finally, the simulation of scenario no. 4 will be discussed with reference to Fig. 13. Fig. 13 shows a performance comparison of prior art relay-protection mechanisms and method "Algo-7" for scenario no. 4 of Tab. 1. A time when the distributed electrical power system 902 is decoupled from the grid 910 is indicated by dashed lines 1310.1 and 1310.2.

Similar to scenario no. 3, scenario no. 4 is very close to the non-detection zone. As a result, the variations of the quantities monitored by the relay-protection mechanisms due to the islanding are very small, as can be seen in graphs 1202.1, 1204.1, and 1206.1 and highlighted by circles 1302.3, 1304.3, and 1306.3. Moreover, as shown in graphs 1202.2, 1204.2, and 1206.2, those variations are not sufficient to detect the islanding of the distributed electrical power system 902 by the relay-protection mechanisms. In particular, the binary graphs 1302.2 and 1304.2 remain completely flat. In the binary graph 1306.2, some spikes, which are highlighted by circle 1306.4 occur, however, those are not sufficiently long in time for an islanding detection to take place.

In contrast, variations of the rotor angle caused by the islanding and highlighted by circle 1308.3 in graph 1308.1 are significantly big such that a detection of the island based on method "Algo-7" is possible, as is shown in graph 1308.2, where a transition highlighted by circle 1308.4 from value 0 to value 1 takes place, which indicates an islanding.

In summary, method "Algo-7" is particular advantageous for the detection of thereof an islanding when the mismatch between real and reactive power between distributed electrical generator 904 and the local load 916 is particularly small.

Reference Signs

| 100 | arrangement of a distributed electrical power system coupled to an electrical power grid |
| --- | --- |
| 102 | distributed electrical power system |
| 104 | electrical power generator |
| 104.2 | alternator of the electrical power generator |
| 104.2.1 | stator-magnetic-field axis |
| 104.4 | exciter of the electrical power generator |
| 104.4.1 | magnetic-field axis |
| 104.6 | rotor angle |
| 106 | islanding-detection arrangement |
| 106.1 | controller of the islanding-detection arrangement |
| 106.1.1 | injection controller |
| 106.1.2 | monitored-quantity-determination unit |
| 106.1.3 | evaluation unit |
| 106.1.4 | communication link |
| 106.1.5 | interface of injection controller |
| 106.1.6 | interface of monitored-quantity-determination unit |
| 106.2 | reactive-power-injection unit |
| 106.2.1 | energy-storage unit |
| 106.2.2 | converter unit |
| 108 | power connection |
| 108.1 | voltage at the power connection |
| 110 | electrical power grid |
| 112 | electrical-power-generator arrangement |
| 112.2 | control unit of the electrical-power-generator arrangement |
| 114 | prime mover |
| 114.2 | engine of prime mover |
| 114.4 | engine-control unit of the prime mover |
| 116 | local load |
| 118 | switch |
| 200 | islanding-detection method |
| 200a | method executed by the islanding-detection arrangement |
| 202 | terminal box |
| 204 | First step in method |
| 206 | Second step in method |
| 208 | Third step in method |
| 210 | Fourth step in method |
| 211a | islanding-identification algorithm |
| 216 | terminal box |

| | |
|---|---|
| 200b | alternative method executed by the islanding-detection arrangement |
| 211b | islanding-identification algorithm |
| 212 | First step of islanding-identification algorithm |
| 214 | Second step of islanding-identification algorithm |
| 300a | method "Algo-4" |
| 300a.2, 4, 6, 7, 8, 10, 12, 14, 16 | steps of the method "Algo-4" |
| 300b | method "Algo-5" |
| 300b.2, 4, 6, 7, 8, 10, 12, 14, 16 | steps of the method "Algo-4" |
| 300c | method "Algo-7" |
| 300b.2, 4, 6, 7, 8, 10, 12, 14, 16 | steps of the method "Algo-4" |
| 400a | method "Algo-2" |
| 400a.2, 4, 6, 7, 8, 10, 12, 14,16 | steps of the method "Algo-2" |
| 400b | method "Algo-3" |
| 400b.2, 4, 6, 7, 8, 10, 12, 14, 16 | steps of the method "Algo-3" |
| 500a.10 | method "Algo-1" |
| 500a.2, 4, 5, 6, 8, 19, 12, 14 | steps of the method "Algo-1" |
| 500b | method "Algo-6" |
| 500b.2, 4, 6, 8, 9, 10,12, 14, 16 | steps of the method "Algo-6" |
| 600 | algorithm |
| 602 | step "Algo-1" |
| 604 | step "Algo-2" |
| 606 | step "Algo-3" |
| 608 | step "Algo-4" |
| 610 | step "Algo-5" |
| 612 | step "Algo-6" |
| 614 | step "Algo-7" |
| 616 | online threshold limit determination and setting |
| 618 | final evaluation |
| 700 | reactive-power signal |
| 700.2 | probe-signal component |
| 700.4 | probe-signal component |
| 700.6 | probe-signal component |
| $T_{monitor}$ | time-window length |
| 801a, 802a | markers indicating single time-window length |
| 800 | rotor angle as a function of time |
| 800.1, 800.2 | impulses of the rotor angle |
| 801b, 802b, 803b | markers indicating the time-window length |
| 900 | distributed electrical power system interruptibly coupled to an electrical power grid |
| 902 | distributed electrical power system |
| 904 | synchronous distributed electrical power generator |
| 906 | islanding-detection arrangement |
| 908 | power connection |
| 910 | electrical power grid |
| 914 | relay-protection unit |
| 916 | local load |
| 1002.1 | Voltage as a function of time (scenario1) |
| 1002.2 | Islanding detection based on voltage (scenario1) |
| 1004.1 | Frequency as a function of time (scenario1) |
| 1004.2 | Islanding detection based on frequency (scenario1) |
| 1006.1 | ROCOF as a function of time (scenario1) |
| 1006.2 | Islanding detection based on ROCOF (scenario1) |
| 1008.1 | Rotor angle as a function of time (scenario1) |
| 1008.2 | Islanding detection based on rotor angle (scenario1) |
| 1102.1 | Voltage as a function of time (scenario 2) |
| 1102.2 | Islanding detection based on voltage (scenario 2) |
| 1104.1 | Frequency as a function of time (scenario 2) |
| 1104.2 | Islanding detection based on frequency (scenario 2) |
| 1106.1 | ROCOF as a function of time (scenario 2) |

**EP 3 996 231 B1**

| 1106.2 | Islanding detection based on ROCOF (scenario 2) |
| 1108.1 | Rotor angle as a function of time (scenario 2) |
| 1108.2 | Islanding detection based on rotor angle (scenario 2) |
| 1202.1 | Voltage as a function of time (scenario 3) |
| 1202.2 | Islanding detection based on voltage (scenario 3) |
| 1204.1 | Frequency as a function of time (scenario 3) |
| 1204.2 | Islanding detection based on frequency (scenario 3) |
| 1206.1 | ROCOF as a function of time (scenario 3) |
| 1206.2 | Islanding detection based on ROCOF (scenario 3) |
| 1208.1 | Rotor angle as a function of time (scenario 3) |
| 1208.2 | Islanding detection based on rotor angle (scenario 3) |
| 1302.1 | Voltage as a function of time (scenario 4) |
| 1302.2 | Islanding detection based on voltage (scenario 4) |
| 1304.1 | Frequency as a function of time (scenario 4) |
| 1304.2 | Islanding detection based on frequency (scenario 4) |
| 1306.1 | ROCOF as a function of time (scenario 4) |
| 1306.2 | Islanding detection based on ROCOF (scenario 4) |
| 1308.1 | Rotor angle as a function of time (scenario 4) |
| 1308.2 | Islanding detection based on rotor angle (scenario 4) |

**Claims**

1. A method for detecting island formation of a distributed electrical power system (102), the distributed electrical power system (102) comprising at least one distributed electrical power generator (104) for generating and providing electrical power to a connection (108), in particular a power line for electrical power, wherein the distributed electrical power system (102) is interruptibly coupled to an electrical power grid (110), the method comprising:

   - generating a reactive-power signal (700) having at least one probe-signal component (700.2, 700.4, 700.6) of a specified kind by an islanding-detection arrangement (106) coupled to the connection (108),
   - injecting the reactive-power signal (700) into the connection (108),
   - determining one or more monitored quantities, which are indicative of a response of the distributed electrical power system (102) to the injected reactive-power signal (700), and
   - applying an islanding-identification algorithm (211, 300a.7, 300b.7, 300c.7) to each of the one or more determined monitored quantities, wherein a result of the islanding-identification algorithm (211, 300a.7, 300b.7, 300c.7) is indicative of whether the distributed electrical power system (102) is decoupled from the electrical power grid (110),
   **characterized in that**
   - the at least one of the monitored quantities involves:

      - a second derivative ($d^2f/dt^2$) with respect to time of a frequency (f) of a voltage (V, 108.1) associated with the generated electrical power (300b.6).

2. The method of claim 1, wherein the at least one of the monitored quantities further involves a quantity from the group consisting of:

   - a first derivative ($dV_{ang}/dt$) with respect to time of a voltage angle ($V_{ang}$) of the voltage (V, 108.1) associated to the generated electrical power (300a.6), and
   - a rotor angle ($\theta_{rotor}$) of the at least one distributed electrical power genera tor (300c.6).

3. The method of claim 1 or 2, wherein determining one or more monitored quantities further comprises the steps:

   - measuring a voltage (108.1) of the distributed electrical power system (102) at the connection (108), and
   - deriving from the measured voltage the one or more monitored quantities, wherein deriving from the measured voltage the one or more monitored quantities comprises deriving from the measured voltage (V) the second derivative ($d^2f/dt^2$) with respect to time of the frequency (f) of the voltage (V, 108.1) associated with the generated electrical power (300b.6) and deriving the first derivative ($dV_{ang}/dt$) with respect to time of a voltage angle ($V_{ang}$) of the voltage (V, 108.1) associated to the generated electrical power (300a.6).

4. The method of claim 2, wherein the at least one monitored quantity involves a difference ($\theta_{rotor\_pul}$) between the rotor angle ($\theta_{rotor}$) of the at least one distributed electrical power generator and an average value ($\theta_{rotor\_avg}$) of the rotor angle of the at least one distributed electrical power generator (300c.6).

5. The method according to any of the preceding claims, wherein the islanding detection algorithm comprises identifying whether the at least one monitored quantity exceeds a threshold value (212, 300a.8, 300b.8, 300c.8) and applying a decision criterion thereon, wherein the islanding detection algorithm comprises the following steps:

- identifying, within a monitoring time window of a time-window length, time intervals during which the at least one monitored quantity exceeds the threshold value (212, 300a.8, 300b.8, 300c.8), and
- applying a decision criterion to the identified time intervals (214, 300a.10, 300b. 10, 300c.10) within the monitoring time window, wherein a result of applying the decision criterion to the identified time intervals is indicative of whether the distributed electrical power system (102) is decoupled from the electrical power grid (110).

6. The method of claim 5, wherein the threshold value is determined using an online-monitoring procedure of the amplitude of the one or more monitored quantities, which online-monitoring procedure continuously adapts the threshold value due to a changing load condition of the distributed electrical power system.

7. The method of claim 5, wherein the decision criterion and/or the threshold value are pre-determined in accordance with the at least one probe-signal component (700.2, 700.4, 700.6).

8. The method according to any of the preceding claims, wherein the islanddetection arrangement (106) is plug-in coupled to the connection (108).

9. The method according to any of the preceding claims, wherein, if the result of applying the islanding-detection algorithm (211, 300a.7, 300b.7, 300c.7) is indicative of the distributed electrical power system (102) being decoupled from the electrical power grid (110), the at least one distributed electrical power generator (104) is operated in a pre-determined islanding-operation mode.

10. The method according to claim 5, wherein the decision criterion indicates that the distributed electrical power system (102) is decoupled from the electrical power grid (110), if

- a count of the identified time intervals exceeds a counter-threshold value (300a.10, 300b. 10, 300c.10), and/or
- an accumulated time of the identified time intervals exceeds an accumulated-time-threshold value (400a.10, 400b.10).

11. The method according to claim 5 or 10, wherein

- at least one determined monitored quantity is an absolute value of a first derivative with respect to time of a voltage angle of the voltage (108.1) associated to the generated electrical power (300a.6), and
- the decision criterion for that monitored quantity defines an upper limit for the number of identified time intervals, which, if exceeded by the identified time intervals, indicates the distributed electrical power system to be decoupled (300a.10).

12. The method according to claim 5 or 10, wherein

- at least one monitored quantity is an absolute value of a second derivative with respect to time of a frequency of the voltage (108.1) associated to the generated electrical power (300b.6), and
- the decision criterion for that monitored quantity defines an upper limit for the number of identified time intervals, which, if exceeded by the identified time intervals, indicates the distributed electrical power system to be decoupled (300b. 10).

13. The method according to claim 5 or 10, wherein

- at least one monitored quantity is an absolute value of a difference between a rotor angle of the at least one distributed electrical power generator and an average rotor angle of the at least one distributed electrical power generator (300c.6), wherein
- the average rotor angle is determined by averaging the rotor angle over an averaging time interval wherein the averaging time interval corresponds to the monitoring time window; and
- the decision criterion for that monitored quantity defines an upper limit for the number of identified time intervals, which, if exceeded by the identified time intervals, indicates the distributed electrical power system to be decoupled (300c.10).

14. The method of any of the preceding claims, wherein the at least one probe signal component is periodic with time and comprises:

- a square-wave-like function with short rise and fall times (700.2, 700.4), and/or
- a step-function-like function with short rise or fall times between steps, which monotonically increases during a first half-wave of the step-function-like function and monotonically decreases during a second half-wave of the step-function-like function (700.6).

15. The method according to any of the preceding claims, wherein the injected reactive-power signal (700) is a periodic function with respect to time having at least one of the following probe-signal components:

- a square-wave-like function with a positive amplitude during a first half period and a negative amplitude during a second half period (700.2); and/or
- a square-wave-like function with a positive amplitude during a fraction of a first half period while the amplitude is zero during a remaining part of the first half period and a negative amplitude during a fraction of a second half period while the amplitude is zero during a remaining part of the second half period (700.4); and/or
- a step-function-like function, which monotonically increases during a first half wave of the step function, subsequently returns to zero, monotonically decreases during a second half wave of the step function, and subsequently returns to zero (700.6).

16. Controller (106.1) adapted for detecting island formation in a distributed electrical power system (102) including at least one distributed electrical power generator (104) for generating and providing electrical power to a connection (108), in particular a power line for electrical power, wherein the distributed electrical power system (102) is interruptibly coupled to an electrical power grid (110), and wherein the controller is adapted to execute the method according to one of the claims 1 to 15, wherein the controller is **characterized in that**

- the at least one of the monitored quantities involves:
- a second derivative ($d^2f/dt^2$) with respect to time of a frequency ($f$) of a voltage ($V$, 108.1) associated with the generated electrical power (300b.6).

17. An islanding-detection arrangement adapted for detecting island formation in a distributed electrical power system (102) including at least one distributed electrical power generator (104) for generating and providing electrical power to a connection (108), in particular a power line for electrical power, wherein the distributed electrical power system (102) is interruptibly coupled to an electrical power grid (110), the islanding-detection arrangement comprising:

- a reactive-power-current-injection unit (106.2) having

- an energy-storage unit (106.2.1) that is configured to store energy and to generate and provide an electrical DC current from the stored energy, and
- a converter unit (106.2.2) that receives the electrical DC current from the energy-storage unit (106.2.1) and is configured to provide an electrical AC current for injection a reactive-power signal (700) into the connection (108);

- a controller, wherein the controller is adapted to execute the method according to one of the claims 1 to 15, wherein the controller is **characterized in that**
- the at least one of the monitored quantities involves:

- a second derivative ($d^2f/dt^2$) with respect to time of a frequency ($f$) of a voltage ($V$, 108.1) associated with the generated electrical power (300b.6).

18. A distributed electrical power system (102) including at least one distributed electrical power generator (104) for generating and providing electrical power to a connection (108), in particular a power line for electrical power, wherein the distributed electrical power system (102) is interruptably coupled to an electrical power grid (110), the distributed electrical power system (102) further comprising the islanding-detection arrangement (106) of claim 17.

**Patentansprüche**

1. Verfahren zum Detektieren einer Inselbildung eines verteilten elektrischen Stromsystems (102), wobei das verteilte elektrische Stromsystem (102) mindestens einen verteilten elektrischen Stromgenerator (104) zum Generieren und Liefern von elektrischer Leistung an eine Verbindung (108) umfasst, insbesondere eine Stromleitung für elektrischen Strom, wobei das verteilte elektrische Stromsystem (102) unterbrechbar an ein elektrisches Stromnetz (110) gekoppelt ist, wobei das Verfahren aufweist:

   - Generieren eines Blindleistungssignals (700) mit mindestens einer Sondensignalkomponente (700.2, 700.4, 700.6) einer spezifizierten Art durch eine Inseldetektionsanordnung (106), die an die Verbindung (108) gekoppelt ist,
   - Einkoppeln des Blindleistungssignals (700) in die Verbindung (108),
   - Bestimmen einer oder mehrerer überwachter Größen, die eine Reaktion des verteilten elektrischen Stromsystems (102) auf das eingekoppelte Blindleistungssignal (700) angeben, und
   - Anwenden eines Inselbildungsidentifikationsalgorithmus (211, 300a.7, 300b.7, 300c.7) auf jede der einen oder mehreren bestimmten überwachten Größen, wobei ein Ergebnis des Inselbildungsidentifikationsalgorithmus (211, 300a.7, 300b.7, 300c.7) angibt, ob das verteilte elektrische Stromsystem (102) von dem elektrischen Stromnetz (110) entkoppelt ist,
   **dadurch gekennzeichnet, dass**
   - die mindestens eine der überwachten Größen beinhaltet:

      - eine zweite Ableitung ($d^2f/dt^2$) bezüglich Zeit einer Frequenz ($f$) einer Spannung ($V$, 108.1), die mit der generierten elektrischen Leistung (300b.6) assoziiert ist.

2. Verfahren nach Anspruch 1, wobei die mindestens eine der überwachten Größen weiter eine Größe aus der Gruppe beinhaltet, die besteht aus:

   - einer ersten Ableitung ($dV_{ang}/dt$) bezüglich Zeit eines Spannungswinkels ($V_{ang}$) der Spannung ($V$, 108.1), die mit der generierten elektrischen Leistung (300a.6) assoziiert ist, und
   - einen Rotorwinkel ($\theta_{rotor}$) des mindestens einen verteilten elektrischen Stromgenerators (300c.6).

3. Verfahren nach Anspruch 1 oder 2, wobei das Bestimmen von einer oder mehreren überwachten Größen weiter die folgenden Schritte aufweist:

   - Messen einer Spannung (108.1) des verteilten elektrischen Stromsystems (102) an der Verbindung (108), und
   - Ableiten der einen oder mehreren überwachten Größen aus der gemessenen Spannung,

   wobei das Ableiten der einen oder mehreren überwachten Größen aus der gemessenen Spannung das Ableiten der zweiten Ableitung ($d^2f/dt^2$) aus der gemessenen Spannung ($V$) bezüglich Zeit der Frequenz ($f$) der Spannung ($V$, 108.1), die mit der generierten elektrischen Leistung (300b.6) assoziiert ist, und das Ableiten der ersten Ableitung ($dV_{ang}/dt$) bezüglich Zeit eines Spannungswinkels ($V_{ang}$) der Spannung ($V$, 108.1), die mit der generierten elektrischen Leistung (300a.6) assoziiert ist, aufweist.

4. Verfahren nach Anspruch 2, wobei die mindestens eine überwachte Größe eine Differenz ($\theta_{rotor\_pul}$) zwischen dem Rotorwinkel ($\theta_{rotor}$) des mindestens einen verteilten elektrischen Stromgenerators und einen Mittelwert ($\theta_{rotor\_avg}$) des Rotorwinkels des mindestens einen verteilten elektrischen Stromgenerators (300c.6) beinhaltet.

5. Verfahren nach einem der vorhergehenden Ansprüche, wobei der Inselbildungsdetektionsalgorithmus das Identifizieren umfasst, ob die mindestens eine überwachte Größe einen Schwellwert (212, 300a.8, 300b.8, 300c.8) und das Anwenden eines Entscheidungskriteriums darauf umfasst, wobei der Inselbildungsdetektionsalgorithmus die folgenden Schritte aufweist:

   - Identifizieren innerhalb eines überwachten Zeitfensters einer Zeitfensterlänge von Zeitintervallen, während denen die mindestens eine überwachte Größe den Schwellwert (212, 300a.8, 300b.8, 300c.8) überschreitet, und

- Anwenden eines Entscheidungskriteriums auf die identifizierten Zeitintervalle (214, 300a.10, 300b.10, 300c.10) innerhalb des überwachten Zeitfensters, wobei ein Ergebnis des Anwendens des Entscheidungskriteriums auf die identifizierten Zeitintervalle angibt, ob das verteilte elektrische Stromsystem (102) von dem elektrischen Stromnetz (110) entkoppelt ist.

6. Verfahren nach Anspruch 5, wobei der Schwellwert unter Verwendung einer Online-Überwachungsprozedur der Amplitude der einen oder mehreren überwachten Größen bestimmt wird, welche Onlineüberwachungsprozedur den Schwellwert kontinuierlich aufgrund einer wechselnden Lastbedingung des verteilten elektrischen Stromsystems anpasst.

7. Verfahren nach Anspruch 5, wobei das Entscheidungskriterium und/oder der Schwellwert gemäß der mindestens einen Sondensignalkomponente (700.2, 700.4, 700.6) im Voraus bestimmt werden.

8. Verfahren nach einem der vorhergehenden Ansprüche, wobei die Inselbildungsdetektionsanordnung (106) an die Verbindung (108) steckgekoppelt ist.

9. Verfahren nach einem der vorhergehenden Ansprüche, wobei, falls das Ergebnis des Anwendens des Inselbildungsdetektionsalgorithmus (211, 300a.7, 300b.7, 300c.7) angibt, dass das verteilte elektrische Stromsystem (102) von dem elektrischen Stromnetz (110) entkoppelt ist, der mindestens eine verteilte elektrischeStromgenerator (104) in einem im Voraus bestimmten Inselbildungsarbeitsmodus arbeitet.

10. Verfahren nach Anspruch 5, wobei das Entscheidungskriterium angibt, dass das verteilte elektrische Stromsystem (102) von dem elektrischen Stromnetz (110) entkoppelt ist, falls

    - ein Zählwert der identifizierten Zeitintervalle einen Zählschwellwert (300a.10, 300b.10, 300c.10) übersteigt, und/oder
    - eine akkumulierte Zeit der identifizierten Zeitintervalle einen akkumulierten Zeitschwellwert (400a.10, 400b.10) überschreitet.

11. Verfahren nach Anspruch 5 oder 10, wobei

    - mindestens eine bestimmte überwachte Größe ein Betrag einer ersten Ableitung bezüglich Zeit eines Spannungswinkels der Spannung (108.1), die mit der generierten elektrischen Leistung (300a.6) assoziiert ist, ist, und
    - das Ableitungskriterium für diese überwachte Größe eine Obergrenze für die Anzahl von identifizierten Zeitintervallen definiert, die, falls durch die identifizierten Zeitintervalle überschritten, angibt, dass das verteilte elektrische Stromsystem entkoppelt ist (300a.10).

12. Verfahren nach Anspruch 5 oder 10, wobei

    - mindestens eine überwachte Größe ein Betrag einer zweiten Ableitung bezüglich Zeit einer Frequenz der Spannung (108.1), die mit der generierten elektrischen Leistung (300b.6) assoziiert ist, ist, und
    - das Entscheidungskriterium für diese überwachte Größe eine Obergrenze für die Anzahl identifizierter Zeitintervalle definiert, die, falls durch die identifizierten Zeitintervalle überschritten, angibt, dass das verteilte elektrische Stromsystem entkoppelt ist (300b.10).

13. Verfahren nach Anspruch 5 oder 10, wobei

    - mindestens eine überwachte Größe ein Betrag einer Differenz zwischen einem Rotorwinkel des mindestens einenverteilten elektrischen Stromgenerators und einem mittleren Rotorwinkel des mindestens einen verteilten elektrischen Stromgenerators (300c.6) ist,
    wobei
    - der mittlere Rotorwinkel durch Mittelung des Rotorwinkels über ein mittelndes Zeitintervall bestimmt wird, wobei das mittelnde Zeitintervall dem überwachten Zeitfenster entspricht; und
    - das Entscheidungskriterium für diese überwachte Größe eine Obergrenze für die Anzahl identifizierter Zeitintervalle definiert, die, falls durch die identifizierten Zeitintervalle überschritten, angibt, dass das verteilte elektrische Stromsystem entkoppelt ist (300c.10).

14. Verfahren nach einem der vorhergehenden Ansprüche, wobei die mindestens eine Sondensignalkomponente zeitlich periodisch ist und aufweist:

- eine rechteckwellenartige Funktion mit kurzen Anstiegs- und Abfallzeiten (700.2, 700.4), und/oder
- eine stufenfunktionsartige Funktion mit kurzen Anstiegs- oder Abfallzeiten zwischen Stufen, die während einer ersten Halbwelle der stufenfunktionsartigen Funktion monoton zunimmt und während einer zweiten Halbwelle der stufenfunktionsartigen Funktion monoton abnimmt (700.6).

**15.** Verfahren nach einem der vorhergehenden Ansprüche, wobei das eingekoppelte Blindleistungssignal (700) bezüglich Zeit eine periodische Funktion ist mit mindestens einer der folgenden Sondensignalkomponenten:

- eine rechteckwellenartige Funktion mit einer positiven Amplitude während einer ersten Halbperiode und einer negativen Amplitude während einer zweiten Halbperiode (700.2); und/oder
- eine rechteckwellenartige Funktion mit einer positiven Amplitude während eines Bruchteils einer ersten Halbperiode, während die Amplitude während eines Restteils der ersten Halbperiode null ist, und einer negativen Amplitude während eines Bruchteils einer zweiten Halbperiode, während die Amplitude während eines Restteils der zweiten Halbperiode (700.4) null ist, und/oder
- eine stufenfunktionsartige Funktion, die während einer ersten Halbwelle der Stufenfunktion monoton zunimmt, danach auf null zurückkehrt, während einer zweiten Halbwelle der Stufenfunktion monoton abnimmt und danach zu null zurückkehrt (700.6).

**16.** Controller (106.1), der ausgelegt ist zum Detektieren einer Inselbildung in einem verteilten elektrischen Stromsystem (102) einschließlich mindestens einem verteilten elektrischen Stromgenerator (104) zum Generieren und Liefern von elektrischer Leistung an eine Verbindung (108), insbesondere eine Stromleitung für elektrischen Strom, wobei das verteilte elektrische Stromsystem (102) unterbrechbar an ein elektrisches Stromnetz (110) gekoppelt ist und wobei der Controller ausgelegt ist zum Ausführen des Verfahrens nach einem der Ansprüche 1 bis 15, wobei der Controller **dadurch gekennzeichnet ist, dass**

- die mindestens eine der überwachten Größen beinhaltet:

- eine zweite Ableitung ($d^2f/dt^2$) bezüglich Zeit einer Frequenz (f) einer Spannung (V, 108.1), mit der generierten elektrischen Leistung (300b.6) assoziiert.

**17.** Inselbildungsdetektionsanordnung, die ausgelegt ist zum Detektieren einer Inselbildung in einem verteilten elektrischen Stromsystem (102) einschließlich mindestens einem verteilten elektrischen Stromgenerator (104) zum Generieren und Liefern von elektrischer Leistung an eine Verbindung (108), insbesondere eine Stromleitung für elektrischen Strom, wobei das verteilte elektrische Stromsystem (102) unterbrechbar an ein elektrisches Stromnetz (110) gekoppelt ist, wobei die Inselbildungsdetektionsanordnung aufweist:

- eine Blindleistungsstromeinkoppeleinheit (106.2) mit

- einer Energiespeichereinheit (106.2.1), die ausgelegt ist zum Speichern von Energie und zum Generieren und Liefern eines elektrischen DC-Stroms von der gespeicherten Energie, und
- eine Wandlereinheit (106.2.2), die den elektrischen DC-Strom von der Energiespeichereinheit (106.2.1) empfängt und ausgelegt ist zum Liefern eines elektrischen AC-Stroms zur Einkopplung eines Blindleistungssignals (700) in die Verbindung (108),

- einen Controller, wobei der Controller ausgelegt ist zum Ausführen des Verfahrens nach einem der Ansprüche 1 bis 15, wobei der Controller **dadurch gekennzeichnet ist, dass**
- die mindestens eine der überwachten Größen beinhaltet:

- eine zweite Ableitung ($d^2f/dt^2$) bezüglich Zeit einer Frequenz (f) einer Spannung (V, 108.1), die mit der generierten elektrischen Leistung (300b.6) assoziiert ist.

**18.** Verteiltes elektrisches Stromsystem (102), einschließlich eines verteilten elektrischen Stromgenerators (104) zum Generieren und Liefern von elektrischer Leistung an eine Verbindung (108), insbesondere eine Stromleitung für elektrischen Strom, wobei das verteilte elektrische Stromsystem (102) unterbrechbar an ein elektrisches Stromnetz (110) gekoppelt ist, wobei das verteilte elektrische Stromsystem (102) weiter die Inselbildungsdetektionsanordnung (106) nach Anspruch 17 aufweist.

**Revendications**

1.  Procédé de détection de formation d'îlot d'un système de puissance électrique distribuée (102), le système de puissance électrique distribuée (102) comprenant au moins un générateur de puissance électrique distribuée (104) pour générer et fournir de la puissance électrique à une connexion (108), particulièrement une ligne de puissance pour puissance électrique, le système de puissance électrique distribuée (102) étant couplé de manière interruptive à un réseau de puissance électrique (110), le procédé comprenant :

    - la génération d'un signal de puissance réactive (700) ayant au moins une composante de signal de sonde (700.2, 700.4, 700.6) d'un type spécifié par un agencement de détection d'îlotage (106) couplé à la connexion (108),
    - l'injection du signal de puissance réactive (700) dans la connexion (108),
    - la détermination d'une ou plusieurs quantités surveillées, qui indiquent une réponse du système de puissance électrique distribuée (102) au signal de puissance réactive (700) injecté, et
    - l'application d'un algorithme d'indentification d'îlotage (211, 300a.7, 300b.7, 300c.7) à chacune des une ou plusieurs quantités surveillées déterminées, un résultat de l'algorithme d'indentification d'îlotage (211, 300a.7, 300b.7, 300c.7) indiquant si le système de puissance électrique distribuée (102) est découplé ou non du réseau de puissance électrique (110),
    **caractérisé en ce que**
    - l'au moins une des quantités surveillées implique :

        - une dérivée seconde ($d^2f/dt^2$) par rapport au temps d'une fréquence (f) d'une tension (V, 108.1) associée à la puissance électrique générée (300b.6).

2.  Procédé selon la revendication 1, l'au moins une des quantités surveillées impliquant en outre une quantité dans le groupe consistant en :

    - une dérivée première ($dV_{ang}/dt$) par rapport au temps d'un angle de tension ($V_{ang}$) de la tension (V, 108.1) associée à la puissance électrique générée (300a.6), et
    - un angle de rotor ($\theta_{rotor}$) de l'au moins un générateur de puissance électrique distribuée (300c.6).

3.  Procédé selon la revendication 1 ou 2, la détermination d'une ou plusieurs quantités surveillées comprenant en outre les étapes suivantes :

    - mesure d'une tension (108.1) du système de puissance électrique distribuée (102) au niveau de la connexion (108), et
    - dérivation à partir de la tension mesurée des une ou plusieurs quantités surveillées, la dérivation à partir de la tension mesurée des une ou plusieurs quantités surveillées comprenant la dérivation à partir de la tension mesurée (V) de la dérivée seconde ($d^2f/dt^2$) par rapport au temps d'une fréquence (f) de la tension (V, 108.1) associée à la puissance électrique générée (300b.6) et la dérivation de la dérivée première ($dV_{ang}/dt$) par rapport au temps d'un angle de tension ($V_{ang}$) de la tension (V, 108.1) associée à la puissance électrique générée (300a.6).

4.  Procédé selon la revendication 2, l'au moins une quantité surveillée impliquant une différence ($\theta_{rotor\_pul}$) entre l'angle de rotor ($\theta_{rotor}$) de l'au moins un générateur de puissance électrique distribuée et une valeur moyenne ($\theta_{rotor\_avg}$) de l'angle de rotor de l'au moins un générateur de puissance électrique distribuée (300c.6).

5.  Procédé selon l'une quelconque des revendications précédentes, l'algorithme de détection d'îlotage comprenant l'identification si l'au moins une quantité surveillée dépasse une valeur seuil (212, 300a.8, 300b.8, 300c.8) et l'application d'un critère de décision sur celui-ci, l'algorithme de détection d'îlotage comprenant les étapes suivantes :

    - identification, à l'intérieur d'une fenêtre temporelle de surveillance d'une longueur de fenêtre temporelle, d'intervalles de temps pendant lesquels l'au moins une quantité surveillée dépasse la valeur seuil (212, 300a.8, 300b.8, 300c.8), et
    - application d'un critère de décision aux intervalles de temps identifiés (214, 300a.10, 300b.10, 300c.10) à l'intérieur de la fenêtre temporelle de surveillance, un résultat d'application du critère de décision aux intervalles de temps identifiés indiquant si le système de puissance électrique distribuée (102) est découplé ou non du réseau de puissance électrique (110).

**6.** Procédé selon la revendication 5, la valeur seuil étant déterminée en utilisant une procédure de surveillance en ligne de l'amplitude des une ou plusieurs quantités surveillées, laquelle procédure de surveillance en ligne adapte continuellement la valeur seuil du fait d'un changement de condition de charge du système de puissance électrique distribuée.

**7.** Procédé selon la revendication 5, le critère de décision et/ou la valeur seuil étant prédéterminés selon l'au moins une composante de signal de sonde (700.2, 700.4, 700.6).

**8.** Procédé selon l'une quelconque des revendications précédentes, l'agencement de détection d'îlotage (106) étant couplé de manière enfichable à la connexion (108).

**9.** Procédé selon l'une quelconque des revendications précédentes, si le résultat d'application de l'algorithme de détection d'îlotage (211, 300a.7, 300b.7, 300c.7) indique que le système de puissance électrique distribuée (102) est découplé du réseau de puissance électrique (110), l'au moins un générateur de puissance électrique distribuée (104) fonctionnant dans un mode de fonctionnement d'îlotage prédéterminé.

**10.** Procédé selon la revendication 5, le critère de décision indiquant que le système de puissance électrique distribuée (102) est découplé du réseau de puissance électrique (110), si

- un comptage des intervalles de temps identifiés dépasse une valeur seuil de compteur (300a.10, 300b.10, 300c.10), et/ou
- un temps accumulé des intervalles de temps identifiés dépasse une valeur seuil de temps accumulé (400a.10, 400b.10).

**11.** Procédé selon la revendication 5 ou 10,

- au moins une quantité surveillée déterminée étant une valeur absolue d'une dérivée première par rapport au temps d'un angle de tension de la tension (108.1) associée à la puissance électrique générée (300a.6), et
- le critère de décision pour cette quantité surveillée définissant une limite supérieure pour le nombre d'intervalles de temps identifiés, lequel, s'il est dépassé par les intervalles de temps identifiés, indique que le système de puissance électrique distribuée est découplé (300a.10).

**12.** Procédé selon la revendication 5 ou 10,

- au moins une quantité surveillée étant une valeur absolue d'une dérivée seconde par rapport au temps d'une fréquence de la tension (108.1) associée à la puissance électrique générée (300b.6), et
- le critère de décision pour cette quantité surveillée définissant une limite supérieure pour le nombre d'intervalles de temps identifiés, lequel, s'il est dépassé par les intervalles de temps identifiés, indique que le système de puissance électrique distribuée est découplé (300b.10).

**13.** Procédé selon la revendication 5 ou 10,

- au moins une quantité surveillée étant une valeur absolue d'une différence entre un angle de rotor de l'au moins un générateur de puissance électrique distribuée et un angle de rotor moyen de l'au moins un générateur de puissance électrique distribuée (300c.6),
- l'angle de rotor moyen étant déterminé en faisant la moyenne de l'angle de rotor sur un intervalle de temps de moyennage, l'intervalle de temps de moyennage correspondant à la fenêtre de temps de surveillance ; et
- le critère de décision pour cette quantité surveillée définissant une limite supérieure pour le nombre d'intervalles de temps identifiés, lequel, s'il est dépassé par les intervalles de temps identifiés, indique que le système de puissance électrique distribuée est découplé (300c.10).

**14.** Procédé selon l'une quelconque des revendications précédentes, l'au moins une composante de signal de sonde étant périodique dans le temps et comprenant :

- une fonction en forme d'onde carrée avec des temps de montée et de descente (700.2, 700.4) courts, et/ou
- une fonction en forme de fonction échelon avec des temps de montée et de descente courts entre chaque échelon, qui augmente de manière monotone pendant une première demi-onde de la fonction en forme de fonction échelon et diminue de manière monotone pendant une deuxième demi-onde de la fonction en forme de fonction échelon (700.6).

**15.** Procédé selon l'une quelconque des revendications précédentes, le signal de puissance réactive (700) injecté étant une fonction périodique par rapport au temps ayant au moins une des composantes de signal de sonde suivantes :

- une fonction en forme d'onde carrée avec une amplitude positive pendant une première demi-période et une amplitude négative pendant une deuxième demi-période (700.2) ; et/ou
- une fonction en forme d'onde carrée avec une amplitude positive pendant une fraction d'une première demi-période tandis que l'amplitude est nulle pendant une partie restante de la première demi-période et une amplitude négative pendant une fraction d'une deuxième demi-période tandis que l'amplitude est nulle pendant une partie restante de la deuxième demi-période (700.4) ; et/ou
- une fonction en forme de fonction échelon, qui augmente de manière monotone pendant une première demi-onde de la fonction échelon, ensuite retourne à zéro, diminue de manière monotone pendant une deuxième demi-onde de la fonction échelon, et ensuite retourne à zéro (700.6).

**16.** Contrôleur (106.1) conçu pour détecter la formation d'îlot dans un système de puissance électrique distribuée (102) comportant au moins un générateur de puissance électrique distribuée (104) pour générer et fournir de la puissance électrique à une connexion (108), particulièrement une ligne de puissance pour puissance électrique, le système de puissance électrique distribuée (102) étant couplé de manière interruptive à un réseau de puissance électrique (110), et le contrôleur étant conçu pour exécuter le procédé selon l'une des revendications 1 à 15, le contrôleur étant **caractérisé en ce que** :

- l'au moins une des quantités surveillées implique :

- une dérivée seconde ($d^2f/dt^2$) par rapport au temps d'une fréquence (f) d'une tension (V, 108.1) associée à la puissance électrique générée (300b.6).

**17.** Agencement de détection d'îlotage conçu pour la détection de formation d'îlot dans un système de puissance électrique distribuée (102) comportant au moins un générateur de puissance électrique distribuée (104) pour générer et fournir de la puissance électrique à une connexion (108), particulièrement une ligne de puissance pour puissance électrique, le système de puissance électrique distribuée (102) étant couplé de manière interruptive à un réseau de puissance électrique (110), l'agencement de détection d'îlotage comprenant :

- une unité d'injection de courant de puissance réactive (106.2) ayant

- une unité de stockage d'énergie (106.2.1) configurée pour stocker de l'énergie et pour générer et fournir un courant CC électrique à partir de l'énergie stocké, et
- une unité de conversion (106.2.2) qui reçoit le courant CC électrique provenant de l'unité de stockage d'énergie (106.2.1) et est configurée pour fournir un courant CA électrique pour une injection d'un signal de puissance réactive (700) dans la connexion (108) ;

- un contrôleur, le contrôleur étant conçu pour exécuter le procédé selon l'une des revendications 1 à 15, le contrôleur étant **caractérisé en ce que** :
- l'au moins une des quantités surveillées implique :

- une dérivée seconde ($d^2f/dt^2$) par rapport au temps d'une fréquence (f) d'une tension (V, 108.1) associée à la puissance électrique générée (300b.6).

**18.** Système de puissance électrique distribuée (102) comportant au moins un générateur de puissance électrique distribuée (104) pour générer et fournir de la puissance électrique à une connexion (108), particulièrement une ligne de puissance pour puissance électrique, le système de puissance électrique distribuée (102) étant couplé de manière interruptive à un réseau de puissance électrique (110), le système de puissance électrique distribuée (102) comprenant en outre l'agencement de détection d'îlotage (106) selon la revendication 17.

FIG. 1a

EP 3 996 231 B1

FIG. 1b

104

104.6

104.2.1

104.2

104.4

104.4.1

EP 3 996 231 B1

**106.1**

106.1.5

106.1.6

106.1.1

106.1.4

106.1.2

106.1.3

# FIG. 1c

200a

FIG. 2a

EP 3 996 231 B1

200b

FIG. 2b

300a

**Algo-4**

```
        ┌─────────────┐
        │    Start    │────── 300a.2
        └──────┬──────┘
               │
               ▼
   ┌───────────────────────┐
   │  Measure voltage angle │────── 300a.4
   │        (V_ang)         │
   └───────────┬───────────┘
               │
               ▼
   ┌───────────────────────┐
   │   Calculate dV_ang/dt  │────── 300a.6
   └───────────┬───────────┘
               │
```

300a.7

Count the pulses (N) for $|dV_{ang}/dt| >$ Threshold over 0.5 sec ────── 300a.8

300a.10

If N > 4

Yes

No

Island status = 0

300a.16

Island status = 1 ────── 300a.12

300a.14 ──── Stop

# FIG. 3a

300b             **Algo-5**

Start —— 300b.2

Measure voltage frequency (f) —— 300b.4

Calculate $d^2f/dt^2$ —— 300b.6

300b.7

Count the pulses (N) for $|d^2f/dt^2| >$ Threshold over 0.5 sec —— 300b.8

300b.10

If N > 4

Yes

No

300b.16 —— Island status = 0      Island status = 1 —— 300b.12

300b.14 —— Stop

# FIG. 3b

300c

**Algo-7**

Start ──300c.2

Measure rotor angle
($\theta_{rotor}$) ──300c.4

$\theta_{rotor\_pul} = \theta_{rotor} - \theta_{rotor\_avg}$ ──300c.6

300c.7

Count the pulses (N) for
$|\theta_{rotor\_pul}| >$ Threshold over
0.5 sec ──300c.8

300c.10

If N > 2

Yes

No

Island status = 0

300c.16

Island status = 1 ──300c.12

300c.14── Stop

FIG. 3c

400a

**Algo-2**

FIG. 4a

400b

**Algo-3**

Start — 400b.2

Measure voltage
magnitude ($V_{mag}$) — 400b.4

Calculate dVmag/dt — 400b.6

400b.7

Observe the cumulative
time ($T_{cum}$) of |dVmag/dt| >
Threshold over 0.5 sec — 400b.8

400b.10

If $T_{cum}$ > 0.25

Yes

No

Island status = 0

Island status = 1 — 400b.12

400b.16

400b.14 — Stop

## FIG. 4b

500a

**Algo-1**

```
                    ┌──────────┐
                    │  Start   │──── 500a.2
                    └────┬─────┘
                         │
              ┌──────────▼──────────┐
              │  Measure voltage    │──── 500a.4          500a.5
              │   frequency (f)     │
              └──────────┬──────────┘
                         │
                      500a.6
                    ◇ If f > fmax ◇          Yes
                    ◇ for 0.5 sec ◇ ─────────────────┐
                         │
                        No
                         │
                      500a.8
                    ◇ If f < fmin ◇          Yes
                    ◇ for 0.5 sec ◇ ─────────────────┤
                         │
                        No
                         │
        ┌────────────────▼───┐      ┌──────────────────┐
        │  Island status = 0 │      │ Island status = 1│──── 500a.10
500a.14 └────────────────────┘      └─────────┬────────┘
                                              │
                    500a.12 ──── ┌──────────┐ │
                                 │   Stop   │◄┘
                                 └──────────┘
```

If f > f$_{max}$ for 0.5 sec

If f < f$_{min}$ for 0.5 sec

Island status = 0

Island status = 1

Measure voltage frequency (f)

# FIG. 5a

500b

**Algo-6**

Start — 500b.2

Measure voltage
frequency (f) — 500b.4

Observe the peak values
off — 500b.6

Extrapolate the curve for
the peak values ($f_{extr}$)
over 0.5 sec — 500b.8

500b.9

500b.10

If $|f_{extr}| >$
Threshold — Yes

No

Island status = 0 — 500b.16

Island status = 1 — 500b.12

500b.14 — Stop

# FIG. 5b

EP 3 996 231 B1

602 — Algo-1

604 — Algo-2

606 — Algo-3

608 — Algo-4

610 — Algo-5

612 — Algo-6

614 — Algo-7

616 — Online threshold limit determination and setting

618

If the average of the input pulses is greater than 50 % for the minimum period of 0.1 sec then Islanding is confirmed

FIG. 6

FIG. 7

EP 3 996 231 B1

FIG. 8a

FIG. 8b

EP 3 996 231 B1

FIG. 9

EP 3 996 231 B1

FIG. 10

FIG. 11

FIG. 12

FIG. 13

**EP 3 996 231 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1926844 B1

- EP 2501014 A1

**Non-patent literature cited in the description**

- Islanding Detection of Synchronous Generator-Based DGs using Rate of Change of Reactive Power. IEEE SYSTEMS JOURNAL. IEEE, 04 December 2019, vol. 13, 4344-4354